# EUROPEAN PATENT APPLICATION

(11) **EP 4 770 176 A1**
(43) Date of publication of application: **01.07.2026**
(21) Application number: 24870645.9
(22) Date of filing: 23.09.2024
(51) Int. Cl.: H04W 24/02

(54) **COMMUNICATION SENSING METHOD AND APPARATUS**

(30) Priority: 25.09.2023 CN 202311246006
(71) Applicant: HUAWEI TECHNOLOGIES CO., LTD., Shenzhen 518129 (CN)
(72) Inventor: HUA, Yuxiu, Shenzhen, Guangdong 518129 (CN); CAO, Longyu, Shenzhen, Guangdong 518129 (CN)
(74) Representative: Körber, Martin Hans
(86) International application number: PCT/CN2024/120345
(87) International publication number: WO 2025/067101

(57) **Abstract**

A communication sensing method and an apparatus relate to the field of communication technologies, and are provided to improve sensing measurement precision of a network device for a terminal device and improve effectiveness of sensing measurement. The method includes: A first communication apparatus obtains device information and precision information of one or more terminal devices; determines one or more network devices based on the device information and the precision information; sends first request information to the one or more network devices; and receives a sensing measurement result from the one or more network devices, where the precision information indicates a difference between a sensing measurement result of the terminal device and an actual shape of the terminal device, and the first request information is used to perform perception measurement.

## Description

This application claims priority to Chinese Patent Application No. 202311246006.2, filed with the China National Intellectual Property Administration on September 25, 2023 and entitled "COMMUNICATION SENSING METHOD AND APPARATUS", which is incorporated herein by reference in its entirety.

### TECHNICAL FIELD

This application relates to the field of communication technologies, and in particular, to a communication sensing method and an apparatus.

### BACKGROUND

A network device and a terminal device may implement high-precision and refined sensing measurement while performing communication and interaction, and the network device may obtain a sensing measurement result through sensing measurement. For example, the network device may send a sensing signal to a terminal device within a coverage area of the network device, the sensing signal generates an echo signal at the terminal device, and the network device may implement sensing measurement on the terminal device based on the echo signal.

However, when there is an obstacle between the network device and the terminal device or a distance between the terminal device and the network device is long, sensing measurement precision of the network device for the terminal device may be reduced.

Therefore, how to improve sensing measurement precision of the network device for the terminal device and improve effectiveness of sensing measurement becomes an urgent problem to be resolved.

### SUMMARY

This application provides a communication sensing method and an apparatus, to improve sensing measurement precision of a network device for a terminal device and improve effectiveness of sensing measurement.

According to a first aspect, a communication sensing method is provided. The method may be performed by a first communication apparatus, may be performed by a component of a first communication apparatus, for example, a processor, a chip, a chip system, or the like of the first communication apparatus, or may be implemented by a logic module or software that can implement all or some functions of a first communication apparatus. The method includes: A first communication apparatus obtains device information and precision information of one or more terminal devices; determines one or more network devices based on the device information and the precision information; sends first request information to the one or more network devices; and receives a sensing measurement result from the one or more network devices. The precision information indicates a difference between a sensing measurement result of the terminal device and an actual shape of the terminal device, and the first request information is used to perform sensing measurement.

According to the first aspect, the first communication apparatus may determine the one or more network devices based on the device information and the precision information. This can ensure that sensing measurement precision of the network device for the terminal device meets the precision information while ensuring that the terminal device is within a coverage area of the network device, thereby improving sensing measurement precision of the network device for the terminal device, and further improving effectiveness of sensing measurement.

In a possible implementation, it is determined, based on one or more of the following, that sensing measurement precision of the one or more network devices meets a requirement corresponding to the precision information: a sensing measurement capability of the network device, load of the network device, or a location of the network device.

Based on this possible implementation, the first communication apparatus may determine, based on information such as the sensing measurement capability of the network device, the load of the network device, or the location of the network device, that the sensing measurement precision of the one or more network devices meets the precision information, to provide a feasible solution for meeting the precision information.

In a possible implementation, the first request information indicates one or more of the following: the precision information, the device information, first configuration information, a first task, or first indication information, where the first configuration information indicates a configuration parameter for the network device to perform sensing measurement, the first configuration information is determined based on the precision information, the first task indicates the network device to perform sensing measurement, and the first indication information indicates a feedback type of the sensing measurement result.

Based on this possible implementation, the first communication apparatus sends the precision information to the network device, so that the network device can determine the configuration parameter for sensing measurement, and the network device performs parameter configuration based on the configuration parameter, to perform sensing measurement on the terminal device more precisely, thereby improving sensing measurement precision. The first communication apparatus sends the device information to the network device, so that the network device can determine a location of the terminal device or a terminal device corresponding to the device information, and may be directional during sensing measurement. The first communication apparatus sends the first configuration information to the network device, so that the network device can directly configure the configuration parameter for sensing measurement based on the first configuration information, to perform sensing measurement on the terminal device more precisely, thereby improving sensing measurement precision. The first communication apparatus sends the first indication information to the network device, so that the network device can perform sensing measurement based on the first task, and may not need to perform sensing measurement all the time, thereby reducing power consumption of the network device. The first communication apparatus sends the first indication information to the network device, so that the network device can adjust the sensing measurement result, thereby reducing transmission overheads, reducing workload of the first communication apparatus, and improving working efficiency of the first communication apparatus.

In a possible implementation, the feedback type of the sensing measurement result is a sensing measurement result; or the feedback type of the sensing measurement result is a model corresponding to the sensing measurement result.

Based on this possible implementation, the sensing measurement result may be fed back by using the foregoing two feedback types of the sensing measurement result, to provide two possible implementation solutions for feeding back the sensing measurement result. Compared with directly feeding back the sensing measurement result, feeding back the model corresponding to the sensing measurement result can reduce transmission overheads, reduce workload of the first communication apparatus, and can improve working efficiency of the first communication apparatus.

In a possible implementation, the first task indicates one or more of the following: first time, a first periodicity, a first mode, and a first trigger condition, where the first time indicates time for which the network device performs sensing measurement, the first periodicity indicates a periodicity for performing sensing measurement, the first mode indicates to perform sensing measurement based on the first periodicity or the first trigger condition, the first trigger condition indicates one or more of the following: a trigger factor, a trigger rule, or third indication information, the trigger factor indicates a status indicator of the terminal device, the trigger rule indicates to trigger sensing measurement when one or more status indicators of the terminal device meet a threshold, and the third indication information indicates whether the trigger rule is met a plurality of times.

Based on this possible implementation, the network device may perform sensing measurement based on the first task periodically, or perform sensing measurement when the first trigger condition is met, or perform sensing measurement within a period of time. This can prevent the network device from continuously sensing measurement to obtain a repeated sensing measurement result as much as possible, thereby effectively reducing power consumption of the network device and improving working efficiency of the network device.

In a possible implementation, the first request information further indicates a time window associated with each of a plurality of network devices associated with the terminal device, and the time window associated with each network device indicates time for which each network device performs sensing measurement.

Based on this possible implementation, the first communication apparatus sets time windows for the plurality of network devices, so that the network devices can perform sensing measurement in turn, to prevent the plurality of network devices from obtaining repeated sensing measurement results, thereby reducing power consumption of the network devices and improving working efficiency of the network devices.

In a possible implementation, the first communication apparatus receives second request information from a second communication apparatus, and obtains the device information and the precision information of the one or more terminal devices based on the first request information, where the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device.

Based on this possible implementation, the first communication apparatus may obtain the device information and the precision information based on the second request information, to provide an implementable solution for obtaining the device information and the precision information.

In a possible implementation, the second request information further indicates one or more of the following: reporting configuration information, second indication information, or first indication information, where the reporting configuration information indicates one or more of the following: reporting time, a reporting mode, a reporting periodicity, or a reporting trigger condition; the reporting mode indicates to report the sensing measurement result based on the reporting periodicity or the reporting trigger condition; the second indication information indicates first area information; and the first indication information indicates a feedback type of the sensing measurement result.

Based on this possible implementation, the first communication apparatus can report the sensing measurement result based on the reporting configuration information, for example, report the sensing measurement result periodically, within a period of time, or when the reporting trigger condition is met. The first communication apparatus may not need to report the sensing measurement result all the time, thereby effectively reducing power consumption of the first communication apparatus and improving working efficiency of the first communication apparatus. In addition, the first communication apparatus may determine area information of the terminal device based on the second indication information, and may determine the network device based on the second indication information, to ensure that the sensing measurement result of the network device for the terminal device covers an area corresponding to the second indication information. The first communication apparatus may adjust the sensing measurement result based on the first indication information, thereby reducing transmission overheads, reducing load of the second communication apparatus, and improving working efficiency of the second communication apparatus.

In a possible implementation, the plurality of network devices are determined based on the device information, the precision information, and the first indication information.

Based on this possible implementation, the first communication apparatus determines the plurality of network devices based on the device information, the precision information, and the first indication information, to provide an implementable solution for determining the network device.

In a possible implementation, the first communication apparatus determines a first task based on the reporting configuration information, where the first task indicates the network device to perform sensing measurement.

Based on this possible implementation, the first communication apparatus determines the reporting configuration information based on the first task, and may synchronously perform sensing measurement and report a sensing measurement result, to provide an implementable solution for determining the first task.

In a possible implementation, the first communication apparatus determines, from the plurality of network devices, one network device as an aggregation node; and sends fourth indication information to the plurality of network devices, where the aggregation node is configured to receive a sensing measurement result from another network device, the fourth indication information indicates to report a sensing measurement result to the aggregation node, and the fourth indication information includes identification information of the aggregation node.

Based on this possible implementation, the first communication apparatus determines the aggregation node, so that the network device can send the sensing measurement result to the aggregation node. Further, the aggregation node may adjust repeated content of the sensing measurement result, and the aggregation node sends an adjusted sensing measurement result to the first communication apparatus, thereby reducing load of the first communication apparatus and improving working efficiency of the first communication apparatus.

In a possible implementation, the first communication apparatus receives a sensing measurement result from the aggregation node; and sends the sensing measurement result to the second communication apparatus; or receives a sensing measurement result from the aggregation node; and adjusts the sensing measurement result based on first indication information, and sends an adjusted sensing measurement result to the second communication apparatus, where the first indication information indicates a feedback type of the sensing measurement result.

Based on this possible implementation, compared with receiving the sensing measurement result by the first communication apparatus from the aggregation node, the first communication apparatus receives the adjusted sensing measurement result from the aggregation node, thereby reducing transmission overheads, reducing load of the first communication apparatus, and improving working efficiency of the first communication apparatus.

In a possible implementation, the first communication apparatus adjusts sensing measurement results of the plurality of network devices based on first indication information, to obtain adjusted sensing measurement results; and sends the adjusted sensing measurement results to the second communication apparatus, where the first indication information indicates a feedback type of the sensing measurement result.

Based on this possible implementation, the first communication apparatus adjusts the sensing measurement result based on the first indication information, thereby reducing transmission overheads, reducing load of the second communication apparatus, and improving working efficiency of the second communication apparatus.

In a possible implementation, the first communication apparatus is an element management device; or the first communication apparatus is a core network element.

In a possible implementation, the second communication apparatus is a network management device; the second communication apparatus is an end-to-end network twin service provider entity and a radio access network network twin service provider entity; or the second communication apparatus is a production management device.

Based on the foregoing two possible implementations, several possible implementation solutions are provided for entities of the first communication apparatus and the second communication apparatus.

According to a second aspect, a communication sensing method is provided. The method may be performed by a second communication apparatus, may be performed by a component of a second communication apparatus, for example, a processor, a chip, a chip system, or the like of the second communication apparatus, or may be implemented by a logic module or software that can implement all or some functions of a second communication apparatus. The method includes: The second communication apparatus sends first request information to a first communication apparatus; and receives a sensing measurement result from the first communication apparatus, where the first request information is used to request to report a sensing measurement result of one or more terminal devices, the first request information indicates device information and precision information of the one or more terminal devices, the precision information indicates a difference between a sensing measurement result of the terminal device and an actual shape of the terminal device, the sensing measurement result is determined based on one or more network devices, and the one or more network devices are determined based on the device information and the precision information.

According to the second aspect, the second communication apparatus sends the first request information to the first communication apparatus, so that the first communication apparatus can obtain the device information and the precision information based on the first request information, and the first communication apparatus can determine the one or more network devices based on the device information and the precision information. This can ensure that sensing measurement precision of the network device for the terminal device meets the precision information while ensuring that the terminal device is within a coverage area of the network device, thereby improving sensing measurement precision of the network device for the terminal device, and further improving effectiveness of sensing measurement.

In a possible implementation, the first request information indicates one or more of the following: reporting configuration information, second indication information, or first indication information, where the reporting configuration information indicates one or more of the following: reporting time, a reporting mode, a reporting periodicity, or a reporting trigger condition; the reporting mode indicates to report the sensing measurement result based on the reporting periodicity or the reporting trigger condition; the second indication information indicates first area information; and the first indication information indicates a feedback type of the sensing measurement result.

Based on this possible implementation, the second communication apparatus sends the first request information to the first communication apparatus, so that the first communication apparatus can report the sensing measurement result based on the reporting configuration information, for example, report the sensing measurement result periodically, within a period of time, or when the reporting trigger condition is met. The first communication apparatus may not need to report the sensing measurement result all the time, thereby effectively reducing power consumption of the first communication apparatus and improving working efficiency of the first communication apparatus. In addition, the first communication apparatus may determine area information of the terminal device based on the second indication information, and may determine the network device based on the second indication information, to ensure that the sensing measurement result of the network device for the terminal device covers an area corresponding to the second indication information. The first communication apparatus may adjust the sensing measurement result based on the first indication information, thereby reducing transmission overheads, reducing load of the second communication apparatus, and improving working efficiency of the second communication apparatus.

In a possible implementation, the first communication apparatus is an element management device; or the first communication apparatus is a core network element.

In a possible implementation, the second communication apparatus is a network management device; the second communication apparatus is an end-to-end network twin service provider entity and a radio access network network twin service provider entity; or the second communication apparatus is a production management device.

Based on the foregoing two possible implementations, several possible implementation solutions are provided for entities of the first communication apparatus and the second communication apparatus.

According to a third aspect, a communication sensing method is provided. The method may be performed by a network device, or may be performed by a component of a network device, for example, a processor, a chip, or a chip system of the network device, or may be implemented by a logical module or software that can implement all or some functions of a network device. The method includes: receiving first request information from a first communication apparatus; sending a first trigger condition to a terminal device; obtaining a sensing measurement result based on the first trigger condition; and sending the sensing measurement result to the first communication apparatus, where the first request information is used to perform sensing measurement; the first request information indicates a first task; the first task indicates the first trigger condition; the first trigger condition indicates a trigger factor and a trigger rule; the trigger factor indicates a status indicator of the terminal device; and the trigger rule indicates to trigger sensing measurement when one or more status indicators of the terminal device meet a threshold.

According to the third aspect, the network device receives the first request information from the first communication apparatus, may determine the first trigger condition, and may send the first trigger condition to the terminal device, so that the terminal device can determine, based on the first trigger condition, that the status indicator of the terminal device meets the first trigger condition, and notify the network device to perform sensing measurement. Therefore, the network device can perform sensing measurement when the status indicator of the terminal device changes, thereby reducing power consumption of the network device and improving effectiveness of sensing measurement.

In a possible implementation, the first request information further indicates one or more of the following: precision information, device information of the terminal device, first configuration information, or first indication information. The precision information indicates a difference between a sensing measurement result of the terminal device and an actual shape of the terminal device; the first configuration information indicates a configuration parameter for the network device to perform sensing measurement, and the first configuration information is determined based on the precision information; and the first indication information indicates a feedback type of the sensing measurement result.

Based on this possible implementation, the network device may determine the configuration parameter for sensing measurement based on the precision information, so that the network device can perform parameter configuration based on the configuration parameter, to perform sensing measurement on the terminal device more precisely, thereby improving sensing measurement precision. The network device may determine, based on the device information, a location of the terminal device or a terminal device corresponding to the device information, and may be directional during sensing measurement. The network device may directly configure the configuration parameter for sensing measurement based on the first configuration information, to perform sensing measurement on the terminal device more precisely, thereby improving sensing measurement precision. The network device may perform sensing measurement based on the first task, and may not need to perform sensing measurement all the time, thereby reducing power consumption of the network device. The network device may adjust the sensing measurement result based on the first indication information, thereby reducing transmission overheads, reducing workload of the first communication apparatus, and improving working efficiency of the first communication apparatus.

In a possible implementation, the feedback type of the sensing measurement result is a sensing measurement result; or the feedback type of the sensing measurement result is a model corresponding to the sensing measurement result.

Based on this possible implementation, the sensing measurement result may be fed back by using the foregoing two feedback types of the sensing measurement result, to provide two possible implementation solutions for feeding back the sensing measurement result. Compared with directly feeding back the sensing measurement result, feeding back the model corresponding to the sensing measurement result can reduce workload of the first communication apparatus, and can improve working efficiency of the first communication apparatus.

In a possible implementation, the first task further indicates one or more of the following: first time, a first periodicity, or a first mode, where the first time indicates time for which the network device performs sensing measurement, the first periodicity indicates a periodicity for performing sensing measurement, and the first mode indicates to perform sensing measurement based on the first periodicity or the first trigger condition.

Based on this possible implementation, the network device may perform sensing measurement within a time period, or may perform sensing measurement periodically, and may not need to perform sensing measurement all the time, thereby reducing power consumption of the network device. In addition, when the first task indicates both the first periodicity and the first trigger condition, the network device may determine, based on the first mode, to indicate to perform sensing measurement based on the first periodicity or the first trigger condition.

In a possible implementation, the first trigger condition further indicates third indication information, and the third indication information indicates whether the trigger rule is met a plurality of times.

Based on this possible implementation, the third indication information may cause the terminal device to determine, a plurality of times, that the status indicator of the terminal device meets the trigger rule, so that misjudgment can be avoided as much as possible, and reliability of sensing measurement can be improved.

In a possible implementation, the network device receives fifth indication information from the terminal device after sending the first trigger condition to the terminal device; and performs sensing measurement on the terminal device based on the fifth indication information, to obtain the sensing measurement result, where the fifth indication information indicates that the status indicator of the terminal device meets the first trigger condition.

Based on this possible implementation, after receiving the fifth indication information from the terminal device, the network device may determine that the status indicator of the terminal device changes, and perform sensing measurement on the terminal device, thereby effectively reducing power consumption of the network device and improving effectiveness of sensing measurement.

In a possible implementation, the network device receives fourth indication information from the first communication apparatus; and sends a sensing measurement result to an aggregation node based on the fourth indication information; or receives a sensing measurement result from another network device based on the fourth indication information, where the fourth indication information indicates to report a sensing measurement result to the aggregation node, and the fourth indication information includes identification information of the aggregation node.

Based on this possible implementation, the network device receives the fourth indication information from the first communication apparatus, and may send the sensing measurement result to the aggregation node; or the network device receives the fourth indication information from the first communication apparatus, and may serve as the aggregation node to receive the sensing measurement result from the another network device. Further, the aggregation node may adjust repeated content of the sensing measurement result, and the aggregation node sends an adjusted sensing measurement result to the first communication apparatus, thereby reducing load of the first communication apparatus, and improving working efficiency of the first communication apparatus.

In a possible implementation, the network device adjusts the sensing measurement result based on first indication information, to reduce transmission overheads, and obtain an adjusted sensing measurement result; and sends the adjusted sensing measurement result to the first communication apparatus, where the first indication information indicates a feedback type of the sensing measurement result.

Based on this possible implementation, the network device may send the sensing measurement result to the first communication apparatus in the foregoing two manners. Compared with directly sending the sensing measurement result by the network device, sending the adjusted sensing measurement result by the network device can reduce load of the first communication apparatus, and can improve working efficiency of the first communication apparatus.

In a possible implementation, the first communication apparatus is an element management device; or the first communication apparatus is a core network element.

Based on this possible implementation, several possible implementation solutions are provided for an entity of the first communication apparatus.

According to a fourth aspect, a communication sensing method is provided. The method may be performed by a terminal device, or may be performed by a component of a terminal device, for example, a processor, a chip, or a chip system of the terminal device, or may be implemented by a logical module or software that can implement all or some functions of a terminal device. The method includes: A terminal device receives a first trigger condition from a network device; and sends fifth indication information to the network device based on a trigger rule when a status indicator meets the trigger rule, where the first trigger condition indicates a trigger factor and the trigger rule, the trigger factor indicates a status indicator of the terminal device, the trigger rule indicates to trigger sensing measurement when one or more status indicators of the terminal device meet a threshold, and the fifth indication information indicates that the status indicator of the terminal device meets the first trigger condition.

According to the fourth aspect, after receiving the first trigger condition from the network device, the terminal device may determine, based on the first trigger condition, that the status indicator of the terminal device meets the first trigger condition, and send the fifth indication information to the network device, to notify the network device that the status indicator of the terminal device changes, so that the network device can perform sensing measurement, thereby improving effectiveness of sensing measurement and reducing power consumption of the network device.

In a possible implementation, the first trigger condition further indicates third indication information, and the third indication information indicates whether the trigger rule is met a plurality of times.

Based on this possible implementation, the terminal device may determine, a plurality of times based on the third indication information, that the status indicator of the terminal device meets the trigger rule, so that misjudgment can be avoided as much as possible, and reliability of sensing measurement can be improved.

According to a fifth aspect, a communication apparatus is provided, to implement the communication sensing method according to the first aspect. The communication apparatus may be the first communication apparatus in the first aspect, or an apparatus or a component, for example, a chip, included in the first communication apparatus.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the first aspect and the possible implementations of the first aspect. The processing module may be configured to implement a processing function in any one of the first aspect and the possible implementations of the first aspect. For example, the processing module is configured to obtain device information and precision information of one or more terminal devices, where the precision information indicates a difference between a sensing measurement result of the terminal device and an actual shape of the terminal device; the processing module is further configured to determine one or more network devices based on the device information and the precision information; the transceiver module is configured to send first request information to the one or more network devices, where the first request information is used to perform sensing measurement; and the transceiver module is further configured to receive a sensing measurement result from the one or more network devices.

Optionally, the transceiver module and the processing module of the communication apparatus in the fifth aspect may further perform corresponding functions in any possible implementation of the first aspect. For details, refer to the detailed descriptions in the method examples. For beneficial effects that can be achieved, refer to the foregoing related content.

According to a sixth aspect, a communication apparatus is provided, to implement the communication sensing method according to the second aspect. The communication apparatus may be the second communication apparatus in the second aspect, or an apparatus or a component, for example, a chip, included in the second communication apparatus.

The communication apparatus includes a corresponding module, unit, or means for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the second aspect and the possible implementations of the second aspect. The processing module may be configured to implement a processing function in any one of the second aspect and the possible implementations of the second aspect. For example, the transceiver module is configured to send second request information to a first communication apparatus, where the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device; and the transceiver module is further configured to receive a sensing measurement result from the first communication apparatus, where the sensing measurement result is determined based on one or more network devices, and the one or more network devices are determined based on the device information and the precision information.

Optionally, the transceiver module and the processing module of the communication apparatus in the sixth aspect may further perform corresponding functions in any possible implementation of the second aspect. For details, refer to the detailed descriptions in the method examples. For beneficial effects that can be achieved, refer to the foregoing related content.

According to a seventh aspect, a communication apparatus is provided, to implement the communication sensing method according to the third aspect. The communication apparatus may be the network device in the third aspect, or an apparatus or a component, for example, a chip, included in the network device.

The communication apparatus includes a corresponding module, unit, or means for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the third aspect and the possible implementations of the third aspect. The transceiver module is configured to receive first request information from a first communication apparatus, where the first request information is used to perform sensing measurement, the first request information indicates a first task, the first task indicates a first trigger condition, the first trigger condition indicates a trigger factor and a trigger rule, the trigger factor indicates a status indicator of a terminal device, and the trigger rule indicates to trigger sensing measurement when one or more status indicators of the terminal device meet a threshold; the transceiver module is further configured to send the first trigger condition to the terminal device; the processing module is configured to obtain a sensing measurement result based on the first trigger condition; and the transceiver module is further configured to send the sensing measurement result to the first communication apparatus.

Optionally, the transceiver module and the processing module of the communication apparatus in the seventh aspect may further perform corresponding functions in any possible implementation of the third aspect. For details, refer to the detailed descriptions in the method examples. For beneficial effects that can be achieved, refer to the foregoing related content.

According to an eighth aspect, a communication apparatus is provided, to implement the communication sensing method according to the fourth aspect. The communication apparatus may be the terminal device in the fourth aspect, or an apparatus or a component, for example, a chip, included in the terminal device.

The communication apparatus includes a corresponding module, unit, or means for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the fourth aspect and the possible implementations of the fourth aspect. The transceiver module is configured to receive a first trigger condition from a network device, where the first trigger condition indicates a trigger factor and a trigger rule, the trigger factor indicates a status indicator of a terminal device, and the trigger rule indicates to trigger sensing measurement when one or more status indicators of the terminal device meet a threshold; the processing module is configured to determine a status indicator of the terminal device based on the trigger factor; the transceiver module is further configured to send fifth indication information to the network device based on the trigger rule when the status indicator meets the trigger rule, where the fifth indication information indicates that the status indicator of the terminal device meets the first trigger condition.

Optionally, the transceiver module and the processing module of the communication apparatus in the eighth aspect may further perform corresponding functions in any possible implementation of the fourth aspect. For details, refer to the detailed descriptions in the method examples. For beneficial effects that can be achieved, refer to the foregoing related content.

According to a ninth aspect, a communication apparatus is provided, and includes at least one processor. The processor is configured to cause, by executing computer instructions stored in a memory or by using a logical circuit, the communication apparatus to perform the communication sensing method according to any one of the foregoing aspects or the possible implementations of any one of the foregoing aspects. The communication apparatus may be the first communication apparatus in any one of the first aspect or the possible implementations of the first aspect, or an apparatus or a component, for example, a chip, included in the first communication apparatus. Alternatively, the communication apparatus may be the second communication apparatus in any one of the second aspect or the possible implementations of the second aspect, or an apparatus or a component, for example, a chip, included in the second communication apparatus; or the network device in any one of the third aspect or the possible implementations of the third aspect, or an apparatus or a component, for example, a chip, included in the network device; or the terminal device in any one of the fourth aspect or the possible implementations of the fourth aspect, or an apparatus or a component, for example, a chip, included in the terminal device.

In some possible implementations, the communication apparatus further includes a memory, configured to store computer instructions and/or a configuration file of the logic circuit. Optionally, the memory and the processor are integrated together, or the memory is independent of the processor.

According to a tenth aspect, a communication apparatus is provided, and includes a processor and a communication interface. The communication interface is configured to: input and/or output a signal. The processor is configured to execute a computer program or instructions, to cause the communication apparatus to perform the communication sensing method in any one of the foregoing aspects. The communication apparatus may be the first communication apparatus in any one of the first aspect or the possible implementations of the first aspect, or an apparatus or a component, for example, a chip, included in the first communication apparatus. Alternatively, the communication apparatus may be the second communication apparatus in any one of the second aspect or the possible implementations of the second aspect, or an apparatus or a component, for example, a chip, included in the second communication apparatus; or the network device in any one of the third aspect or the possible implementations of the third aspect, or an apparatus or a component, for example, a chip, included in the network device; or the terminal device in any one of the fourth aspect or the possible implementations of the fourth aspect, or an apparatus or a component, for example, a chip, included in the terminal device.

In some possible implementations, the communication interface is an interface circuit, and is configured to: read and write computer instructions. For example, the interface circuit is configured to: receive computer-executable instructions (where the computer-executable instructions are stored in a memory, and may be directly read from the memory, or may be read via another component), and transmit the computer-executable instructions to the processor.

In some possible implementations, the communication interface is configured to communicate with a module outside the communication apparatus.

In some possible implementations, the communication apparatus may be a chip or a chip system. When the apparatus is the chip system, the chip system may include a chip, or may include a chip and another discrete component.

According to an eleventh aspect, a communication apparatus is provided, and includes a logic circuit and an interface circuit. The interface circuit is configured to: input information and/or output information. The logic circuit is configured to: perform the communication sensing method in any one of the foregoing aspects, and perform processing and/or generate to-be-output information based on the input information. The communication apparatus may be the first communication apparatus in any one of the first aspect or the possible implementations of the first aspect, or an apparatus or a component, for example, a chip, included in the first communication apparatus. Alternatively, the communication apparatus may be the second communication apparatus in any one of the second aspect or the possible implementations of the second aspect, or an apparatus or a component, for example, a chip, included in the second communication apparatus; or the network device in any one of the third aspect or the possible implementations of the third aspect, or an apparatus or a component, for example, a chip, included in the network device; or the terminal device in any one of the fourth aspect or the possible implementations of the fourth aspect, or an apparatus or a component, for example, a chip, included in the terminal device.

According to a twelfth aspect, a computer-readable storage medium is provided. The computer-readable storage medium stores a computer program or instructions. When the computer program or the instructions are executed by a processor, the communication sensing method in any one of the foregoing aspects is caused to be performed.

According to a thirteenth aspect, a computer program product is provided. When the computer program product is executed by a processor, the communication sensing method in any one of the foregoing aspects is caused to be performed.

It may be understood that when the communication apparatus provided in any one of the fourth aspect to the eleventh aspect is a chip, the foregoing sending action/function may be understood as outputting information, and the foregoing receiving action/function may be understood as inputting information.

For technical effects brought by any one of the fourth aspect to the thirteenth aspect, refer to the technical effects brought by any one of the first aspect or the possible implementations of the first aspect, or refer to the technical effects brought by any one of the second aspect or the possible implementations of the second aspect, or refer to the technical effects brought by any one of the third aspect or the possible implementations of the third aspect, or refer to the technical effects brought by any one of the fourth aspect or the possible implementations of the fourth aspect. Details are not described herein again.

According to a fourteenth aspect, a communication system is provided. The communication system includes the first communication apparatus according to any one of the fifth aspect or the possible implementations of the fifth aspect, and the second communication apparatus according to any one of the sixth aspect or the possible implementations of the sixth aspect. Alternatively, the communication system may further include the network device according to any one of the seventh aspect or the possible implementations of the seventh aspect. Alternatively, the communication system includes the terminal device according to any one of the eighth aspect or the possible implementations of the eighth aspect.

### BRIEF DESCRIPTION OF DRAWINGS

FIG. 1 is a diagram of a communication system according to an embodiment of this application;
FIG. 2 is a diagram of a system architecture according to an embodiment of this application;
FIG. 3 is a diagram of a system architecture according to an embodiment of this application;
FIG. 4 is a diagram of a system architecture according to an embodiment of this application;
FIG. 5 is a diagram of a communication apparatus according to an embodiment of this application;
FIG. 6 is a diagram of interaction of a communication sensing method according to an embodiment of this application;
FIG. 7 is a diagram of interaction of a communication sensing method according to an embodiment of this application;
FIG. 8 is a diagram of interaction of a communication sensing method according to an embodiment of this application;
FIG. 9A and FIG. 9B are a diagram of interaction of a communication sensing method according to an embodiment of this application;
FIG. 10A and FIG. 10B are a diagram of interaction of a communication sensing method according to an embodiment of this application;
FIG. 11A to FIG. 11C are a diagram of interaction of a communication sensing method according to an embodiment of this application;
FIG. 12 is a diagram of a structure of a first communication apparatus according to an embodiment of this application;
FIG. 13 is a diagram of a structure of a second communication apparatus according to an embodiment of this application;
FIG. 14 is a diagram of a structure of a network device according to an embodiment of this application;
FIG. 15 is a diagram of a structure of a terminal device according to an embodiment of this application; and
FIG. 16 is a diagram of a structure of a communication apparatus according to an embodiment of this application.

### DESCRIPTION OF EMBODIMENTS

The following describes implementations of embodiments of this application in detail with reference to accompanying drawings in this specification.

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more unless otherwise specified. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c. Herein, a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, for same or similar parts of embodiments, mutual reference may be made between embodiments, unless otherwise specified. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding the technical solutions in embodiments of this application, related technologies of this application are first briefly described below.

### (1) Environment model

The environment model is a description of environment elements such as a building, a road, a plant, a network device, and a terminal device in a physical environment and a proportional relationship between the environment elements.

Optionally, a representation form of the environment model may be a physical entity (for example, a sandbox model), or may be a digital representation (for example, an electronic map or computer-aided modeling).

The environment model in this application specifically refers to a digital representation.

### (2) Network twin system

An environment model plays an important role in the network twin system. With the environment model, the network twin system can visualize network running status data through real-time rendering and data modeling in three-dimensional scenarios, and display real-time data in a more intuitive manner. In addition, based on the environment model, the network twin system can accurately simulate radio signal propagation between the network device and the terminal device in a deterministic channel modeling method (for example, a ray method), and evaluate network performance (for example, network coverage, a cell uplink/downlink throughput, or a cell user capacity) by simulating a physical network running rule.

The network twin system is application of a digital twin technology in the field of wireless communication.

The digital twin technology is a technical means of creating a virtual entity of a physical entity in a digital manner, and using historical data, real-time data, an algorithm model, and the like to simulate, verify, predict, and control a full lifecycle process of the physical entity.

The network twin system is a digital image of a physical network and can interact with the physical network in real time. Core elements of the network twin system include a model, data, a service, and a connection.

In the network twin system, a twin corresponding to an element (for example, a network element, a topology, or an environment) in the physical network may be constructed through various data collection and simulation, to form a network twin in a digital space. In addition, in the system, various network management and applications can use network twins to efficiently analyze, diagnose, simulate, and control physical networks based on data and models, achieving high-level autonomy throughout a full lifecycle of the network.

### (3) Environment modeling method

Optionally, the environment modeling method may be model construction based on laser point cloud data, model construction based on a real-photographed photo, and model construction based on surveying and mapping data.

During model construction based on the laser point cloud data, a physical environment may be first scanned by using a lidar sensor, to obtain the laser point cloud data; preprocessing such as filtering and classification is performed on the laser point cloud data; and models corresponding to different environment elements are constructed by using preprocessed data and an imaging algorithm, to synthesize a complete environment model.

During model construction based on the real-photographed photo, a physical environment may be first photographed by using a ground camera or an uncrewed aerial vehicle, to obtain image data of environment elements; and processing such as scale normalization, cropping, stitching, and 3D is performed on the image data, to generate a complete environment model.

During model construction based on the surveying and mapping data, shape data (such as a street width and a building height) of an environment element is first obtained by using a surveying and mapping tool, and an environment model is manually drawn by using tool software (such as computer-aided design software).

However, the foregoing three environment modeling methods have high data collection costs and a long modeling periodicity, and are applicable to an environment element whose shape remains unchanged for a long time. When a shape of an environment element frequently changes, for example, a terminal device, performing modeling in the foregoing three manners may cause huge labor and material overheads, and it is difficult to ensure real-time consistency between an environment model and a real physical environment.

A 5th generation (5th generation, 5G)-to-business (to business, ToB) scenario is used as an example. An autonomous freight flatbed usually carries different goods, and goods are placed differently. As a result, an overall shape of the autonomous freight flatbed often changes. Therefore, in the foregoing manner, shape data of the autonomous freight flatbed and the goods carried in the autonomous freight flatbed is collected frequently (for example, a plurality of times a day), and then a model of the autonomous freight flatbed is constructed by using the collected shape data, which may consume huge costs and may also affect production efficiency.

Therefore, a sensing measurement result may be obtained by using a communication sensing method, and further modeling may be performed based on the sensing measurement result.

### (4) Integrated sensing and communication

Integrated sensing and communication may mean that a unified design of a communication function and a sensing function is implemented through a joint design of an air interface and a protocol, time-frequency-space resource multiplexing, hardware device sharing, and the like. This allows a wireless network to implement a high-precision and refined sensing function while performing high-quality communication and interaction, thereby improving overall performance and a service capability of the network.

Optionally, in integrated sensing and communication, a sensing capability may focus on radio signal sensing.

For example, a direct, reflected, or scattered signal of a radio wave may be analyzed to obtain sensing of a target object or environment information (such as an attribute and a status), and functions such as positioning, ranging, speed measurement, imaging, detection, recognition, or environment reconstruction are completed, to implement sensing exploration on a physical world.

Optionally, the integrated sensing and communication technology may be applied to fields such as smart city, smart transportation, or smart factory.

For example, in the smart factory, a wireless sensing function may be deployed on a network device, and the network device sends a sensing signal to sense a location, a form, a speed, or the like of a target goods/robot, so that a factory environment can be effectively monitored in real time, and tasks such as continuous attention to the target device/goods/robot can be completed.

Based on the descriptions of the foregoing technology, in a communication system, a network device or a terminal device may sense the target object or environment information based on the radio wave, to perform environment modeling.

For example, the network device may send a sensing signal to a terminal device within a coverage area of the network device, the sensing signal generates an echo signal at the terminal device, and the network device may implement sensing measurement on the terminal device based on the echo signal.

However, when there is an obstacle between the network device and the terminal device or a distance between the terminal device and the network device is long, sensing measurement precision of the network device for the terminal device may be reduced.

Therefore, how to improve sensing measurement precision of the network device for the terminal device and improve effectiveness of sensing measurement becomes an urgent problem to be resolved.

To resolve the foregoing technical problem, this application proposes a communication sensing method. The method includes: A first communication apparatus obtains device information and precision information of one or more terminal devices; determines one or more network devices based on the device information and the precision information; sends first request information to the one or more network devices; and receives a sensing measurement result from the one or more network devices, where the precision information indicates a difference between a sensing measurement result of the terminal device and an actual shape of the terminal device, and the first request information is used to perform perception measurement.

In the communication sensing method provided in this embodiment of this application, the first communication apparatus may determine the one or more network devices based on the device information and the precision information. This can ensure that sensing measurement precision of the network device for the terminal device meets the precision information while ensuring that the terminal device is within a coverage area of the network device, thereby improving sensing measurement precision of the network device for the terminal device, and further improving effectiveness of sensing measurement.

The technical solutions in embodiments of this application may be applied to various communication systems. The communication system may be a 3rd generation partnership project (3rd generation partnership project, 3GPP) communication system, for example, 4th generation (4th generation, 4G), long term evolution (long term evolution, LTE), a 5G mobile communication system, new radio (new radio, NR), a system in which LTE and 5G hybrid networking is used, a non-terrestrial network (non-terrestrial network, NTN) system, a mobile communication system evolved after 5G, for example, 6th generation (6th generation, 6G), a vehicle-to-everything (vehicle-to-everything, V2X) system, a device-to-device (device-to-device, D2D) communication system, a machine-to-machine (machine-to-machine, M2M) communication system, internet of things (internet of things, IoT), narrowband internet of things (narrowband internet of things, NB-IoT), another next-generation communication system, an integrated sensing and communication system, or a satellite communication system. The communication system may alternatively be a non-3GPP communication system, for example, a wireless local area network (wireless local area network, WLAN) system such as wireless fidelity (wireless fidelity, Wi-Fi). This is not limited.

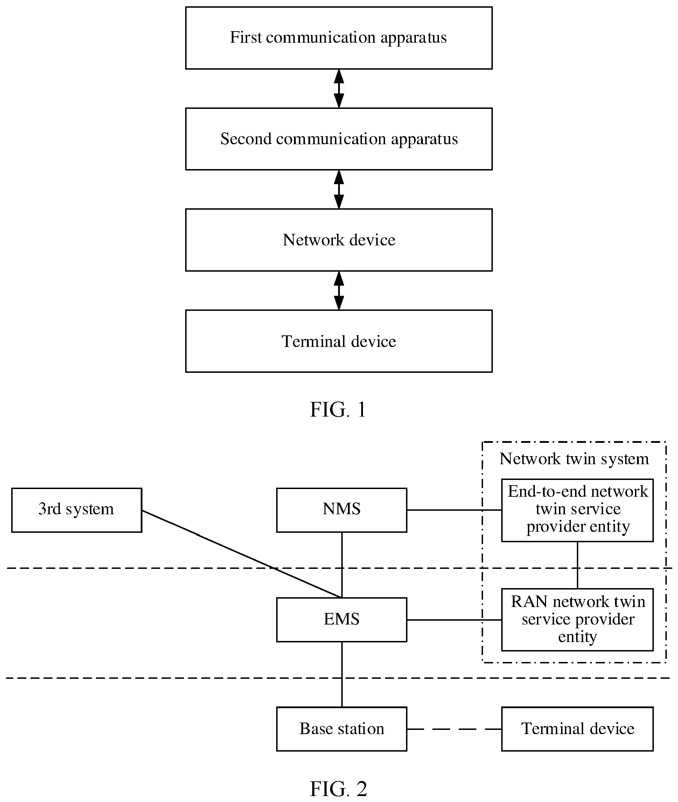

For example, FIG. 1 is a diagram of a communication system according to this application. The communication system may include a first communication apparatus, a second communication apparatus, a network device, and a terminal device.

The first communication apparatus and the second communication apparatus may be management plane communication apparatuses, and are configured to send indication information. The network device and the terminal device may be user plane communication apparatuses, and are configured to perform data transmission.

The second communication apparatus and the network device need to communicate with each other via the first communication apparatus.

The terminal device may access the network device, or may be handed over between different network devices.

This application is applicable to various communication scenarios, for example, synchronization, channel estimation, signal detection, and beam measurement.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

The first communication apparatus in FIG. 1 may be an element management device (for example, a device including an element management system (element management system, EMS), which may be referred to as an EMS for short in this application. The EMS may be configured to manage one or more network elements of a specific type, or may be referred to as a domain management system or a single-domain management system) that schedules a network device in an access network; or the first communication apparatus may be a device (for example, a core network element) that schedules a network device in a core network; or the first communication apparatus may be a non-real-time RAN intelligent controller (RAN intelligent controller, RIC) in an open radio access network (open radio access network, O-RAN) architecture (the non-real-time RIC may process a service that requires a delay greater than 1 second, such as data analysis and artificial intelligence model training).

For example, the core network element may be a network exposure function (network exposure function, NEF) network element, an access and mobility management function (access and mobility management function, AMF) network element, a session management function (session management function, SMF) network element, an authentication server function (authentication server function, ASF) network element, a network data analysis function (network data analytics services, NwDAF) network element, a network slice selection function (network slice selection function, NSSF) network element, a unified data management function (unified data management, UDM) network element, a policy control function (policy control function, PCF) network element, or the like.

The NEF network element is located between the core network and an external third-party application function, and is responsible for managing all external applications that open network data to the outside. To access internal data of the core network, the NEF network element needs to be used. The AMF network element has an access and mobility management function in the core network, and performs registration, connection, reachability, and mobility management. The NEF network element may provide corresponding security assurance to ensure that an external application or device securely accesses a 3GPP network. The NwDAF network element is configured to: process and analyze information.

The second communication apparatus in FIG. 1 may be a network management device (for example, a device including a network management system (network management system, NMS), which may be referred to as an NMS for short in this application. The NMS is responsible for network operation, management, and maintenance functions, and may also be referred to as a cross-domain management system) that has functions such as network operation, management, and maintenance, a RAN network twin (network twin, NT) service provider entity (the RAN network twin service provider entity provides services such as real-time monitoring, network performance evaluation, policy verification, and configuration optimization for a radio access network), and an end-to-end network twin service provider entity (the end-to-end network twin service provider entity may provide services such as real-time monitoring, performance evaluation, policy verification, and configuration optimization for an end-to-end network); or the second communication apparatus may be a production management device (for example, a device including a third-party (third, 3rd) system) that has functions such as management, maintenance, and operation in a production, campus, or factory.

The terminal device in FIG. 1 may be a device having a wireless transceiver function or a chip or a chip system that can be disposed in the device, may allow a user to access a network, and is a device configured to provide voice and/or data connectivity for the user. The terminal device may also be referred to as UE, a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be UE, a subscriber unit, an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) evolved after 5G. The access terminal may be a cellular phone, a smartphone, a cordless phone, a session initiation protocol (session initiation protocol, SIP) phone, a wireless data card, a wireless local loop (wireless local loop, WLL) station, a personal digital assistant (personal digital assistant, PDA), a handheld device (handset) with a wireless communication function, a laptop computer (laptop computer), a tablet computer, a computing device, or another processing device connected to a wireless modem, a vehicle-mounted device, an uncrewed aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation security (transportation safety), a wireless terminal in machine type communication (machine type communication, MTC), a wireless terminal in smart city (smart city), a wireless terminal in smart home (smart home), a wireless terminal in a 5G network or a future communication network, or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

The network device in FIG. 1 may be any device that is deployed in an access network and that can perform wireless communication with a terminal device, or may be a chip or a chip system that can be disposed in the device, or may be a logical node or a logical module or a function implemented by software, and may be configured to implement functions such as a radio physical control function, resource scheduling and radio resource management, radio access control, and mobility management.

Specifically, the network device may be a device supporting wired access, or may be a device supporting wireless access.

For example, the network device may be a node in a RAN, or may be referred to as a radio access network node (or device). The network device may alternatively be a base transceiver station (base transceiver station, BTS) in a global system for mobile communications (global system for mobile communications, GSM) or code division multiple access (code division multiple access, CDMA) network. Alternatively, the network device may be a NodeB (NodeB) in a wideband code division multiple access (wideband code division multiple access, WCDMA) network. Alternatively, the network device may be an evolved NodeB (evolved NodeB, e-NodeB, NodeB, or eNB) in an LTE system or an LTE-advanced (LTE-advanced, LTE-A) system, for example, a conventional macro base station eNB and a micro base station eNB in a heterogeneous network scenario. Alternatively, the network device may be a next generation NodeB (next generation NodeB, gNB) in an NR system. Alternatively, the network device may be a network device in a future evolved PLMN. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in an NTN, to be specific, may be deployed on a flying platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that implements a base station function in IoT, for example, a device that implements a base station function in uncrewed aerial vehicle communication, V2X, D2D, or M2M. Alternatively, the network device may be a radio controller in a cloud radio access network (cloud radio access network, CRAN) scenario. Alternatively, the network device may be a wearable device or a vehicle-mounted device.

Optionally, the base station in embodiments of this application may include various forms of base stations, for example, a macro base station, a micro base station (also referred to as a small cell), a relay station, an access point (access point, AP), a home base station, a TRP, a transmission point (transmission point, TP), one or a group of antenna panels (including a plurality of antenna panels) of a base station in a 5G system, a mobile switching center, or the like. This is not specifically limited in embodiments of this application.

Alternatively, the network device may be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The modules or units for implementing some functions of the base station may be modules or units in the base station, or may be independent devices.

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any unit in the CU (or the CU-CP or the CU-UP), the DU, and the RU in this application may be implemented by using a software module, a hardware module, or a combination of the software module and the hardware module.

Based on the foregoing descriptions of the first communication apparatus, the second communication apparatus, the network device, and the terminal device, this application proposes three possible system architectures.

In a first possible system architecture, as shown in FIG. 2, for example, the first communication apparatus is an EMS, and the second communication apparatus is an NMS. The network device is a base station in a RAN domain, the EMS may manage a capacity and a function of the base station, and the NMS may schedule the base station via the EMS, to obtain a sensing measurement result.

A network twin system in FIG. 2 may include an end-to-end network twin service provider entity and a RAN network twin service provider entity. The RAN network twin service provider entity may obtain a sensing measurement result via the EMS, and the end-to-end network twin service provider entity may obtain the sensing measurement result via the NMS or the RAN network twin service provider entity.

A 3rd system in FIG. 2 has a same function as the NMS, and may schedule the base station via the EMS, to obtain the sensing measurement result.

For example, when the terminal device is a passive device (for example, a temporarily stacked material or a temporarily constructed warehouse), the base station may send a sensing signal to the terminal device, to perform sensing measurement.

The sensing signal generates an echo signal at the terminal device, and the base station may perform processing such as parsing, filtering, and noise reduction on the echo signal, and further, may compress a processed signal.

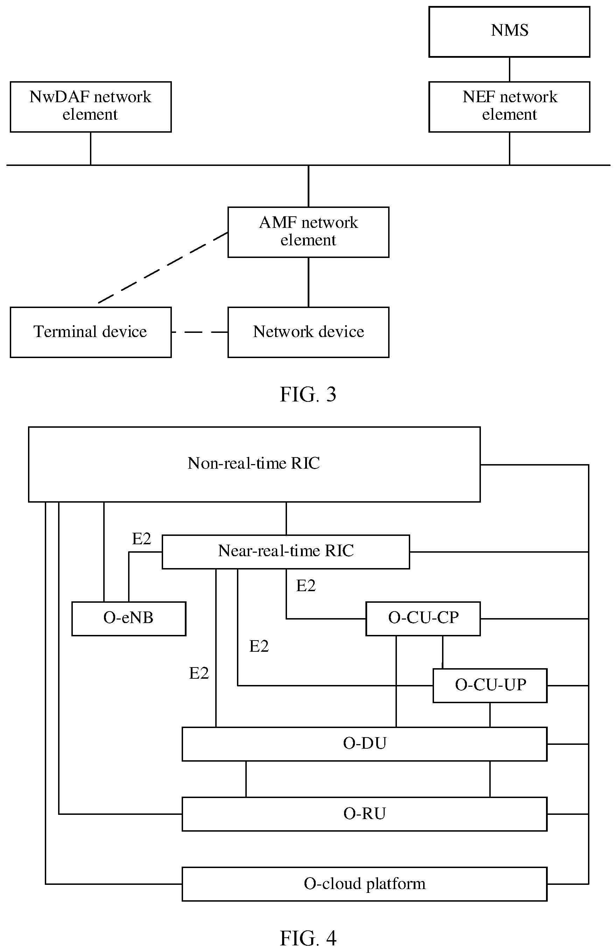

In a second possible embodiment, as shown in FIG. 3, for example, the first communication apparatus is a core network element (for example, an AMF network element, an NwDAF network element, or an NEF network element), and the second communication apparatus is an NMS. The NMS may indicate, via the AMF network element, the NwDAF network element, the NEF network element, or the like, the network device to perform sensing measurement, so as to obtain a sensing measurement result.

Communication between the AMF network element and the terminal device may be transparently transmitted via the network device.

The core network element is described in the foregoing content. Details are not described herein again.

In a third possible embodiment, as shown in FIG. 4, a system architecture is an O-RAN architecture. For example, the first communication apparatus is a non-real-time RIC. The non-real-time RIC may obtain a sensing measurement result via a near-real-time RIC (the near-real-time RIC may process a service that requires a delay less than 1 second (50 ms to 200 ms), for example, radio resource management, handover decision, dual connectivity control, or load balancing).

A management plane in FIG. 4 is a service management and orchestration (service management and orchestration, SMO) frame, including the non-real-time RIC.

Functional modules (such as an O-CU-CP, O-CU-UP, an O-DU, and an O-RU) whose interfaces are E2 in FIG. 4 may be collectively referred to as an E2-node (E2-Node). The near-real-time RIC may indicate, via the E2 interface, the E2-node to perform sensing measurement, so as to obtain a sensing measurement result.

An O-eNB in FIG. 4 is a base station in a 4G mobile communication system, and the near-real-time RIC may also indicate, via the E2 interface, the O-eNB to perform sensing measurement. An open cloud platform (open-Cloud, O-Cloud) is a cloud computing platform, and is formed by a set of physical infrastructure nodes that meet an O-RAN, to host a related O-RAN function.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

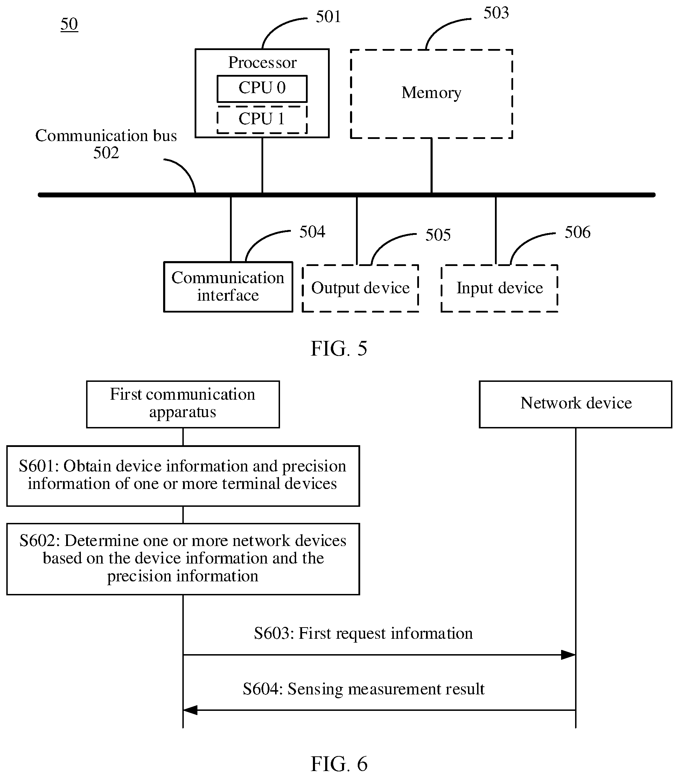

During specific implementation, the first communication apparatus, the second communication apparatus, the terminal device, and the network device shown in FIG. 1 to FIG. 4 may all use a composition structure shown in FIG. 5, or include components shown in FIG. 5. FIG. 5 is a composition diagram of a communication apparatus 50 according to an embodiment of this application. The communication apparatus 50 may be a terminal device or a chip or a system on chip in a terminal device; or may be a network device or a chip or a system on chip in a network device; or may be a first communication apparatus or a chip or a system on chip in a first communication apparatus; or may be a second communication apparatus or a chip or a system on chip in a second communication apparatus.

As shown in FIG. 5, the communication apparatus 50 includes one or more processors 501. Further, the communication apparatus 50 may further include a communication bus 502 and at least one communication interface (where FIG. 5 is merely an example, and an example in which the communication apparatus 50 includes a communication interface 504 and one processor 501 is used for description). Optionally, the communication apparatus 50 may further include a memory 503.

The processor 501 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 501 may include one or more CPUs, for example, a CPU 0 and a CPU 1 in FIG. 5.

The communication bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 5, but this does not mean that there is only one bus or only one type of bus. The communication bus 502 is configured to connect different components in the communication apparatus 50, so that the different components in the communication apparatus 50 may communicate and interact with each other.

The communication interface 504 may be a transceiver module, and is configured to communicate with another device or a communication network. The communication network may be, for example, an Ethernet (Ethernet), a RAN, or a WLAN. For example, the communication interface 504 may be an apparatus, for example, a transceiver or a transceiver machine. Alternatively, the communication interface 504 may be a transceiver circuit located in the processor 501, and is configured to implement signal input and signal output of the processor.

The memory 503 may be an apparatus with a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be accessed by a computer and that can be configured to carry or store expected program code in a form of instructions or a data structure, but is not limited thereto. The memory may exist independently, and is connected to the processor through the communication bus 502. The memory may alternatively be integrated with the processor.

For example, the memory 503 is configured to store computer-executable instructions for executing the solutions of this application, and the processor 501 controls the execution. The processor 501 is configured to execute the computer-executable instructions stored in the memory 503, to implement the communication sensing method provided in embodiments of this application.

Alternatively, optionally, in embodiments of this application, the processor 501 may perform processing-related functions in communication sensing methods provided in the following embodiments, and the communication interface 504 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive an input from a user in a plurality of manners. For example, the input device 506 may be a mouse, a keyboard, a touchscreen device, a sensing device, or the like.

It should be noted that the composition structure shown in FIG. 5 does not constitute a limitation on the communication apparatus. In addition to the components shown in FIG. 5, the communication apparatus may include more or fewer components than those shown in the figure, or combine some components, or have different component arrangements.

The following describes, with reference to the accompanying drawings, the communication sensing method provided in embodiments of this application. It may be understood that, in embodiments of this application, the first communication apparatus, the second communication apparatus, the network device, and the terminal device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

FIG. 6 is a diagram of interaction of a communication sensing method according to this application. The communication sensing method is described by using interaction between a first communication apparatus and a network device as an example. Certainly, an action of the first communication apparatus in the method may alternatively be performed by an apparatus/module in the first communication apparatus, for example, a chip, a processor, or a processing unit in the first communication apparatus. An action of the network device in the method may alternatively be performed by an apparatus/module in the network device, for example, a chip, a processor, or a processing unit in the network device. This is not specifically limited in this embodiment of this application. In this embodiment of this application, processing performed by a single execution body (for example, the first communication apparatus or the network device) may also be performed by a plurality of execution bodies, and these execution bodies may be logically and/or physically separated. For example, refer to FIG. 6. The communication sensing method includes the following steps.

S601: The first communication apparatus obtains device information and precision information of one or more terminal devices.

The precision information indicates a difference between a sensing measurement result of the terminal device and an actual shape of the terminal device.

Optionally, the precision information may be an absolute deviation, or may be a similarity. This is not limited.

A higher similarity indicates a smaller difference between the sensing measurement result of the terminal device and the actual shape of the terminal device, and indicates higher precision.

For example, the precision information is an absolute deviation. When an absolute deviation of a height is 10 cm, a difference between a height of the terminal device and an actual height of the terminal device in the sensing measurement result needs to be less than or equal to 10 cm; or when an absolute deviation of a width is 10 cm, a difference between a width of the terminal device and an actual width of the terminal device in the sensing measurement result needs to be less than or equal to 10 cm.

For another example, the precision information is a similarity. When the similarity is 90%, a similarity between the measurement sensing result and the actual shape of the terminal device needs to be greater than or equal to 90%; or when the similarity is 85%, a similarity between the measurement sensing result and the actual shape of the terminal device needs to be greater than or equal to 85%.

Optionally, the device information may be identification information of the terminal device, or may be location information of the terminal device. This is not limited.

For example, the device information is the identification information of the terminal device. The identification information of the terminal device may be an internet protocol (internet protocol, IP) address of the terminal device, or may be a media access control (media access control, MAC) address of the terminal device, or may be a unique identification code (for example, an 18-bit identification code) of the terminal device.

For another example, the device information is the location information of the terminal device. The location information of the terminal device may be longitude and latitude of the terminal device, or may be geographical coordinates of the terminal device.

Optionally, the first communication apparatus is a network element management device; or the first communication apparatus is a core network element.

The element management device and the core network element have been described in FIG. 1. Details are not described herein again.

S602: The first communication apparatus determines one or more network devices based on the device information and the precision information.

Optionally, the first communication apparatus may determine, based on the device information, that the terminal device is located in a coverage area of the one or more network devices.

There may be a plurality of terminal devices within a coverage area of one network device. Correspondingly, one terminal device may be located within a coverage area of a plurality of network devices.

Optionally, the first communication apparatus may determine, based on one or more of the following, that sensing measurement precision of the one or more network devices meets a requirement corresponding to the precision information: a sensing measurement capability of the network device, load of the network device, or a location of the network device.

For example, the first communication apparatus may determine, based on the location of the network device, a distance between the network device and the terminal device, and whether there is an obstacle between the network device and the terminal device; and/or the first communication apparatus may determine, based on the sensing measurement capability of the network device, an upper limit of sensing measurement precision of the network device; and/or the first communication apparatus may determine, based on the load of the network device, whether a precision requirement can be met when the network device performs sensing measurement.

For example, the precision information is a similarity. The first communication apparatus determines the network device based on one or more of the foregoing. A similarity between a sensing measurement result of the network device for the terminal device and an actual shape of the terminal device needs to be greater than or equal to a similarity corresponding to the precision information.

It should be noted that the first communication apparatus may determine the one or more network devices based on the device information, may determine the one or more network devices based on the precision information, or may determine the one or more network devices based on the device information and the precision information. This is not limited.

S603: The first communication apparatus sends first request information to the one or more network devices; and correspondingly, the network device receives the first request information from the first communication apparatus.

The first request information is used to perform sensing measurement.

Optionally, the first request information may indicate one or more of the following: the precision information, the device information, first configuration information, a first task, or first indication information.

### (1) First configuration information

The first configuration information indicates a configuration parameter for the network device to perform sensing measurement, and the first configuration information may be determined based on precision information.

For example, the first configuration information may include one or more of the following parameters: an antenna angle, a carrier frequency, a bandwidth, and a transmit power, and a range of each parameter in the first configuration information is associated with the precision information.

For example, when the precision information indicates that an absolute error is less than or equal to 10 centimeters, and a distance between the network device and the terminal is 100 m, the antenna angle may be set to be directly facing the terminal device, the carrier frequency may be 4.9 GHz, the bandwidth may be greater than 100 MHz, and the transmit power may be greater than 46 dBm.

Optionally, the network device may adjust the configuration parameter (for example, an antenna angle, a carrier frequency, a bandwidth, and a transmit power) for sensing measurement based on the first configuration information, to improve sensing measurement precision.

Based on the first configuration information, the network device may directly configure the configuration parameter for sensing measurement based on the first configuration information, to perform sensing measurement on the terminal device more precisely, thereby improving sensing measurement precision.

### (2) First task

The first task indicates the network device to perform sensing measurement.

Optionally, the first task indicates one or more of the following: first time, a first periodicity, a first mode, and a first trigger condition.

The first time indicates time for which the network device performs sensing measurement.

For example, the first time may indicate a time period (for example, sensing measurement is performed between 9:00 and 10:00), or the first time may indicate a time offset (for example, sensing measurement is performed after a preset time offset from a current moment).

The first periodicity indicates a periodicity for performing sensing measurement.

For example, the first periodicity may be a time interval, and sensing measurement may be periodically performed based on the first periodicity in a time period determined based on the first time; or the first periodicity may indicate start time, a time interval, and end time, and sensing measurement may be periodically performed based on the first periodicity.

The first mode indicates to perform sensing measurement based on the first periodicity or the first trigger condition.

For example, the first mode occupies one bit. When a bit value is 0, it may indicate that sensing measurement is performed periodically; or when a bit value is 1, it may indicate that sensing measurement is performed when the first trigger condition is met. Alternatively, when a bit value is 1, it may indicate that sensing measurement is performed periodically; or when a bit value is 0, it may indicate that sensing measurement is performed when the first trigger condition is met.

The first trigger condition indicates one or more of the following: a trigger factor, a trigger rule, or third indication information.

The trigger factor indicates a status indicator of the terminal device.

For example, the status indicator of the terminal device may be load, a motor power, a load variation, or a motor power variation.

The trigger rule indicates to trigger sensing measurement when one or more status indicators of the terminal device meet a threshold.

For example, the trigger rule may indicate an upper threshold and a lower threshold of the status indicator of the terminal device, the trigger rule may indicate a combination of the foregoing trigger factors, or the trigger rule may indicate an upper threshold and a lower threshold of the status indicator of the terminal device and a combination of the foregoing trigger factors.

For example, the trigger factors are a motor power and load, and the trigger rule is that a motor power of the terminal device is greater than or equal to a preset threshold 1. Sensing measurement is performed when a motor power of the network device is greater than or equal to the preset threshold 1.

For another example, the trigger factors are a motor power and load, and the trigger rule is that a motor power of the terminal device is greater than or equal to a preset threshold 1 and load is greater than or equal to a threshold 2. Sensing measurement is performed when a motor power of the network device is greater than or equal to the preset threshold 1 and load is greater than or equal to the threshold 2.

The third indication information indicates whether the trigger rule is met a plurality of times.

For example, the third indication information is three bits. It is assumed that a 1^{st} bit indicates whether the trigger rule is met a plurality of times, and a 2^{nd} bit and a 3^{rd} bit indicate a quantity of times that the trigger rule is met. When a value of the 1^{st} bit is 0, it may indicate that the network device performs sensing measurement when a trigger rule is met once, and the 2^{nd} bit and the 3^{rd} bit may be reserved or any value. When a value of the 1^{st} bit is 1, it may indicate that the network device performs sensing measurement when the trigger rule is met at least twice. When values of the 2^{nd} bit and the 3^{rd} bit are 10, it may indicate that the network device performs sensing measurement when the trigger rule is met at least twice. When values of the 2^{nd} bit and the 3^{rd} bit are 11, it may indicate that the network device performs sensing measurement when the trigger rule is met at least three times.

Alternatively, when a value of the 1^{st} bit is 1, it may indicate that the network device performs sensing measurement when a trigger rule is met once, and the 2^{nd} bit and the 3^{rd} bit may be reserved or any value. When a value of the 1^{st} bit is 0, it may indicate that the network device performs sensing measurement when the trigger rule is met at least twice. When values of the 2^{nd} bit and the 3^{rd} bit are 10, it may indicate that the network device performs sensing measurement when the trigger rule is met at least twice. When values of the 2^{nd} bit and the 3^{rd} bit are 11, it may indicate that the network device performs sensing measurement when the trigger rule is met at least three times.

For another example, the third indication information is one bit. When a bit value is 0, it may indicate that the network device performs sensing measurement when the trigger rule is met once; or when a bit value is 1, it may indicate that the network device performs sensing measurement when the trigger rule is met twice. Alternatively, when a bit value is 1, it may indicate that the network device performs sensing measurement when the trigger rule is met once; or when a bit value is 0, it may indicate that the network device performs sensing measurement when the trigger rule is met twice.

The network device may perform sensing measurement based on the first task, and may not need to perform sensing measurement all the time, thereby reducing power consumption of the network device.

### (3) First indication information

The first indication information indicates a feedback type of the sensing measurement result.

Optionally, the feedback type of the sensing measurement result is a sensing measurement result; or the feedback type of the sensing measurement result is a model corresponding to the sensing measurement result.

For example, the first communication apparatus may directly send the sensing measurement result to the second communication apparatus based on the first indication information, or send the model corresponding to the sensing measurement result to the second communication apparatus.

Optionally, the first indication information may also indicate a model type, for example, a digital model or an information model.

For example, the first indication information is two bits, a 1^{st} bit indicates a feedback type of the sensing measurement result, and a 2^{nd} bit indicates a model type when the feedback type is a model. When a bit value of the 1^{st} bit is 0, it may indicate that the feedback type is the sensing measurement result, and the 2^{nd} bit may be any value or may be reserved; or when a bit value of the 1^{st} bit is 1, it may indicate that the feedback type is a model, and a model type may be determined based on a bit value of the 2^{nd} bit. Alternatively, when a bit value of the 1^{st} bit is 1, it may indicate that the feedback type is the sensing measurement result, and the 2^{nd} bit may be any value or may be reserved; or when a bit value of the 1^{st} bit is 0, it may indicate that the feedback type is a model, and a model type may be determined based on a bit value of the 2^{nd} bit.

For example, when a bit value of the 2^{nd} bit is 0, it may indicate that the model type is a digital model; or when a bit value of the 2^{nd} bit is 1, it may indicate that the model type is an information model. Alternatively, when a bit value of the 2^{nd} bit is 1, it may indicate that the model type is a digital model; or when a bit value of the 2^{nd} bit is 0, it may indicate that the model type is an information model.

In a possible embodiment, for example, the terminal device is an autonomous freight flatbed. Assuming that the trigger factors may be a load variation and a motor power variation of the autonomous freight flatbed, and the trigger rule may be that the load variation of the autonomous freight flatbed is greater than 10 kg and the motor power variation is greater than 10 kW, the third indication information indicates that a quantity of times may be 3. When the load variation of the autonomous freight flatbed is greater than 10 kg and the motor power variation is greater than 10 kW three consecutive times, the network device sends a sensing signal to the autonomous freight flatbed, to obtain a sensing measurement result.

It may be understood that, when sending the sensing measurement result to the second communication apparatus, the first communication apparatus may also perform simple processing (for example, compression) on the sensing measurement result, to reduce transmission overheads.

The network device may adjust the sensing measurement result based on the first indication information, thereby reducing transmission overheads, reducing work load of the first communication apparatus, and improving working efficiency of the first communication apparatus.

S604: The network device sends a sensing measurement result to the first communication apparatus; and correspondingly, the first communication apparatus receives a sensing measurement result from the one or more network devices.

For example, the network device may perform processing such as compression on the sensing measurement result, and send the sensing measurement result to the first communication apparatus.

Optionally, the network device may send a sensing signal to the terminal device, the sensing signal forms an echo signal on a terminal device side, and the network device may obtain the sensing measurement result based on the echo signal.

For example, the network device may perform processing such as parsing, filtering, and noise reduction on the echo signal, to obtain the sensing measurement result.

Optionally, the network device may send the sensing measurement result to the first communication apparatus, or may send an adjusted sensing measurement result to the first communication apparatus.

For example, the network device may adjust the sensing measurement result based on the first indication information, to obtain an adjusted sensing measurement result, thereby reducing transmission overheads, reducing workload of the first communication apparatus, and improving working efficiency of the first communication apparatus.

Based on FIG. 6, the first communication apparatus may determine the one or more network devices based on the device information and the precision information. This can ensure that sensing measurement precision of the network device for the terminal device meets the precision information while ensuring that the terminal device is within a coverage area of the network device, thereby improving sensing measurement precision of the network device for the terminal device, and further improving effectiveness of sensing measurement.

Based on S603 in FIG. 6, this application provides several possible embodiments for the first request information sent by the first communication apparatus.

In a first possible embodiment, for example, the first request information indicates first configuration information, a first task, and first indication information. The network device may perform sensing measurement related configuration based on the first configuration information. Further, the network device may perform sensing measurement based on the first task, to obtain a sensing measurement result. In addition, the network device may adjust the sensing measurement result based on the first indication information, and send an adjusted sensing measurement result to the first communication apparatus.

For example, the first indication information indicates a model type. The network device may model the sensing measurement result based on the first indication information, and send a model to the first communication apparatus.

In a second possible embodiment, for example, the first request information indicates first configuration information and a first task. The network device may perform sensing measurement related configuration based on the first configuration information. Further, the network device may perform sensing measurement based on the first task to obtain a sensing measurement result. Compared with the first possible embodiment, in this embodiment, the network device may directly send the sensing measurement result to the first communication apparatus.

In a third possible embodiment, the first request information indicates precision information and a first task. First, the network device may determine first configuration information based on the precision information, and may perform sensing measurement related configuration based on the first configuration information. Second, the network device may perform sensing measurement based on the first task, to obtain a sensing measurement result. Compared with the first possible embodiment, in this embodiment, the network device may directly send the sensing measurement result to the first communication apparatus.

In a fourth possible embodiment, for example, the first request information indicates device information, first configuration information, a first task, and first indication information. Different from the first possible embodiment, in this embodiment, the network device may determine, based on the device information, a location of the terminal device or a terminal device corresponding to the device information, to perform sensing measurement on the terminal device more precisely.

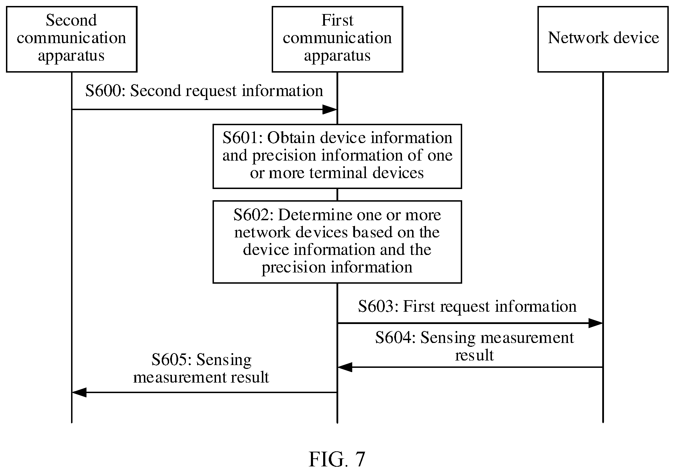

Based on the communication sensing method in FIG. 6, this application further proposes a communication sensing method. In the method, a first communication apparatus may obtain device information and precision information of one or more terminal devices from a second communication apparatus. Specific steps are shown in FIG. 7.

S600: The second communication apparatus sends second request information to the first communication apparatus; and correspondingly, the first communication apparatus receives the second request information from the second communication apparatus.

The second request information further indicates one or more of the following: reporting configuration information, second indication information, or first indication information.

### (1) Reporting configuration information

The reporting configuration information indicates one or more of the following: reporting time, a reporting mode, a reporting periodicity, or a reporting trigger condition.

The reporting mode indicates to report a sensing measurement result based on the reporting periodicity or the reporting trigger condition.

For example, the reporting mode occupies one bit. When a bit value is 0, it may indicate that the sensing measurement result is reported periodically; or when a bit value is 1, it may indicate that the sensing measurement result is reported when the reporting trigger condition is met. Alternatively, when a bit value is 1, it may indicate that the sensing measurement result is reported periodically; or when a bit value is 0, it may indicate that the sensing measurement result is reported when the reporting trigger condition is met.

The reporting time indicates time for which the first communication apparatus reports a sensing measurement result.

For example, the reporting time may indicate a time period (for example, the sensing measurement result is reported between 9:00 and 10:00), or the reporting time may indicate a time offset (for example, the sensing measurement result is reported after a preset time offset from a current moment).

The reporting periodicity indicates the first communication apparatus to periodically report a sensing measurement result.

For example, the reporting periodicity may be a time interval, and sensing measurement may be periodically performed based on the first periodicity in a time period determined based on the reporting time; or the reporting periodicity may indicate start time, a time interval, and end time, and sensing measurement may be periodically performed based on the reporting periodicity.

The reporting trigger condition indicates a condition met when the first communication apparatus reports a sensing measurement result.

For example, the reporting trigger condition may indicate a group of reporting trigger rules.

For example, if a length difference in two adjacent sensing measurement results received by the first communication apparatus is greater than a threshold 1, the first communication apparatus reports a sensing measurement result; or if a length difference in two adjacent sensing measurement results received by the first communication apparatus is greater than a threshold 1 and a load difference is greater than a threshold 2, the first communication apparatus reports a sensing measurement result.

Optionally, the first communication apparatus may determine a first task based on the reporting configuration information.

For example, the first communication apparatus may determine first time in the first task based on the reporting time in the reporting configuration information (for example, the first time is earlier than the reporting time); may determine a first periodicity in the first task based on the reporting periodicity in the reporting configuration information (for example, the reporting periodicity is the same as the first periodicity); may determine a first mode in the first task based on the reporting mode in the reporting configuration information (for example, the reporting mode indicates to report a sensing measurement result based on the reporting periodicity, and the first mode also indicates to perform sensing measurement based on the first periodicity); and may determine a first trigger condition in the first task based on the reporting trigger condition in the reporting configuration information (for example, the reporting trigger condition indicates to report a sensing measurement result when load of the terminal device is greater than or equal to a threshold 1, and the first trigger condition indicates to perform sensing measurement when the load of the terminal device is greater than or equal to the threshold 1).

The first communication apparatus can report the sensing measurement result based on the reporting configuration information, for example, report the sensing measurement result periodically, within a period of time, or when the reporting trigger condition is met. The first communication apparatus may not need to report the sensing measurement result all the time, thereby effectively reducing power consumption of the first communication apparatus and improving working efficiency of the first communication apparatus.

### (2) Second indication information

The second indication information indicates first area information.

The first area information indicates a part or all of an area of the terminal device.

For example, the second indication information is two bits. A 1^{st} bit may indicate a horizontal angle interval of the terminal device, and a 2^{nd} bit may indicate a vertical angle interval of the terminal device.

For example, when the horizontal angle interval of the terminal device is (0°, 360°), and the vertical angle interval is (0°, 180°), it indicates that sensing measurement is performed on the entire terminal device.

Optionally, when the first request information indicates the second indication information, the first communication apparatus may determine a plurality of network devices based on the device information, the precision information, and the second indication information.

For example, when the second indication information indicates to perform sensing measurement on the entire terminal device, the first communication apparatus may determine four network devices. The four network devices may be located in different orientations, and may perform sensing measurement on different areas of the terminal device. Further, the first communication apparatus may obtain a sensing measurement result of the entire terminal device.

Based on the second indication information, the first communication apparatus may determine area information of the terminal device based on the second indication information, and may determine the network device based on the second indication information, to ensure that a sensing measurement result of the network device for the terminal device covers an area corresponding to the second indication information.

### (3) First indication information

The first indication information indicates a feedback type of the sensing measurement result.

The first indication information is consistent with the first indication information in S603. Details are not described herein again.

Optionally, when the first communication apparatus determines a plurality of network devices, the first request information further indicates a time window associated with each of the plurality of network devices associated with the terminal device.

The time window associated with each network device indicates time for which each network device performs sensing measurement.

For example, three network devices are determined. It is assumed that a first network device corresponds to a time window 1, a second network device corresponds to a time window 2, and a third network device corresponds to a time window 3. The first network device performs sensing measurement in a time period corresponding to the time window 1, the second network device performs sensing measurement in a time period corresponding to the time window 2, and the third network device performs sensing measurement in a time period corresponding to the time window 3.

Based on the foregoing descriptions of the time window, the first communication apparatus sets time windows for the plurality of network devices, so that the network devices can perform sensing measurement in turn, to prevent the plurality of network devices from obtaining repeated sensing measurement results, thereby reducing power consumption of the network devices and improving working efficiency of the network devices.

Optionally, the first communication apparatus may determine, from the plurality of network devices, one network device as an aggregation node, and send fourth indication information to the plurality of network devices.

The aggregation node is configured to receive a sensing measurement result from another network device, the fourth indication information indicates to report a sensing measurement result to the aggregation node, and the fourth indication information includes identification information of the aggregation node.

For example, the identification information of the aggregation node may be an IP address of the aggregation node, or may be a MAC address of the aggregation node, or may be a unique identification code of the aggregation node.

It may be understood that the fourth indication information may be carried in the second indication information, or may be separately sent.

Optionally, the second communication apparatus is a network management device; the second communication apparatus is an end-to-end network twin service provider entity and a RAN network twin service provider entity; or the second communication apparatus is a production management device.

An entity of the second communication apparatus is described in FIG. 1. Details are not described herein again.

S605: The first communication apparatus sends a sensing measurement result to the second communication apparatus; and correspondingly, the second communication apparatus receives the sensing measurement result from the first communication apparatus.

For example, based on the reporting configuration information, the first communication apparatus may periodically send the sensing measurement result to the second communication apparatus; send the sensing measurement result to the second communication apparatus within a time period; or send the sensing measurement result to the second communication apparatus when the reporting trigger condition is met.

The reporting configuration information is consistent with the reporting configuration information in S600. Details are not described herein again.

According to the communication sensing method in FIG. 7, the first communication apparatus may obtain the device information and the precision information based on the second request information, to provide an implementable solution for obtaining the device information and the precision information.

Based on S605 in FIG. 7, this application provides several possible embodiments based on the first communication apparatus sending the sensing measurement result to the second communication apparatus.

In a first possible embodiment, the first communication apparatus determines a network device as an aggregation node, and the first communication apparatus may receive a sensing measurement result from the aggregation node, and further send the sensing measurement result to the second communication apparatus.

For example, a first network device is an aggregation node. A second network device, a third network device, and a fourth network device send a sensing measurement result to the aggregation node. Further, the aggregation node may send the sensing measurement result to the first communication apparatus.

The aggregation node may perform processing such as compression on the received sensing measurement result and the sensing measurement result obtained by the aggregation node.

In a second possible embodiment, the first communication apparatus determines a network device as an aggregation node, and the aggregation node may adjust the sensing measurement result based on the first indication information, send an adjusted sensing measurement result to the first communication apparatus, and further send the sensing measurement result to the second communication apparatus.

For example, a first network device is an aggregation node. A second network device, a third network device, and a fourth network device send a sensing measurement result to the aggregation node, and the aggregation node may adjust the received sensing measurement result and the sensing measurement result of the aggregation node based on the first indication information, and send the adjusted sensing measurement result to the first communication apparatus.

In a third possible embodiment, the first communication apparatus receives sensing measurement results from a plurality of network devices, and further sends the sensing measurement results to the second communication apparatus.

In a fourth possible embodiment, the first communication apparatus receives sensing measurement results from a plurality of network devices, and the first communication apparatus may adjust the sensing measurement results based on the first indication information, and further send adjusted sensing measurement results to the second communication apparatus.

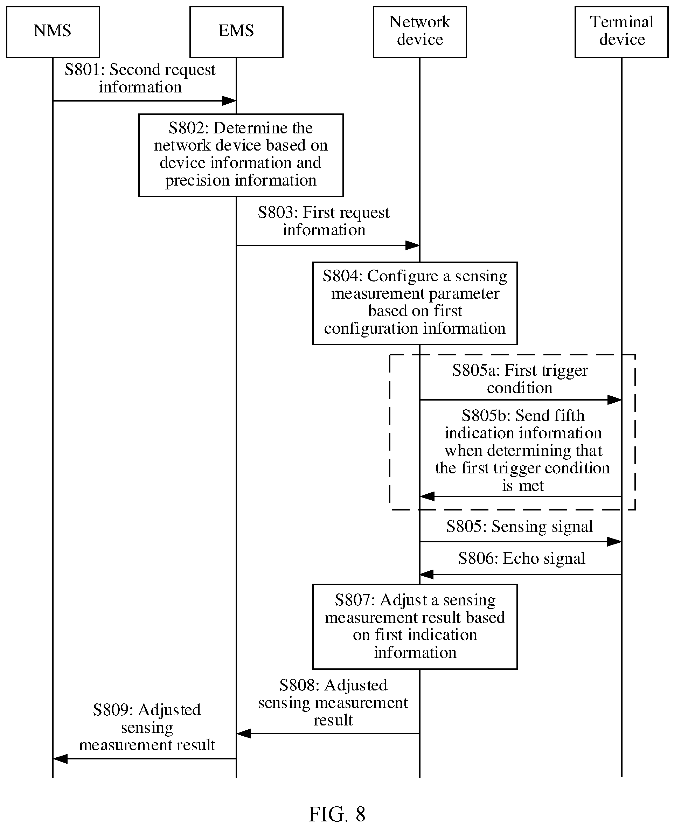

Optionally, this application further proposes a communication sensing method. After a terminal device determines that a status indicator of the terminal device meets a first trigger condition, a network device may perform sensing measurement on the terminal device. Specific steps may be shown in FIG. 8.

S805a: The network device sends the first trigger condition to the terminal device; and correspondingly, the terminal device receives the first trigger condition from the network device.

Optionally, the first trigger condition may indicate a trigger factor and a trigger rule; the first trigger condition may indicate a trigger factor, a trigger rule, and third indication information; or the first trigger condition may indicate any one of a trigger factor, a trigger rule, or a first trigger condition. This is not limited.

The trigger factor indicates a status indicator of the terminal device; the trigger rule indicates to trigger sensing measurement when one or more status indicators of the terminal device meet a threshold; and the third indication information indicates whether the trigger rule is met a plurality of times.

S805b: When determining that the first trigger condition is met, the terminal device sends fifth indication information to the network device; and correspondingly, the network device receives the fifth indication information from the terminal device.

The fifth indication information indicates that the status indicator of the terminal device meets the first trigger condition.

For example, the fifth indication information may be one bit. When a bit value is 0, it indicates that the status indicator of the terminal device meets the first trigger condition; or when a bit value is 1, it indicates that the status indicator of the terminal device meets the first trigger condition.

Optionally, the terminal device may determine the status indicator of the terminal device based on the trigger factor, and send the fifth indication information to the network device.

For example, the terminal device is a mobile station, and the mobile station receives the first trigger condition from the network device. Assuming that the trigger factor may be a load rate of the mobile station, and the trigger rule may be that the load rate of the mobile station is greater than or equal to 80%, the third indication information indicates that a quantity of times may be 3. When the load rate of the mobile station is greater than or equal to 80% three consecutive times, the mobile station may send fourth indication information to the network device, and the network device may send a sensing signal to the mobile station based on the fourth indication information, to obtain a sensing measurement result.

Based on the foregoing content, after receiving the first trigger condition from the network device, the terminal device may determine, based on the first trigger condition, that the status indicator of the terminal device meets the first trigger condition, and send the fifth indication information to the network device, to notify the network device that the status indicator of the terminal device changes, so that the network device can perform sensing measurement, thereby improving effectiveness of sensing measurement and reducing power consumption of the network device.

It should be noted that, when a trigger object corresponding to the first trigger condition is the terminal device, the network device may send the first trigger condition to the terminal device, and the terminal device determines whether the first trigger condition is met. Further, the terminal device may notify the network device to perform sensing measurement. Alternatively, when a trigger object corresponding to the first trigger condition is not the terminal device (for example, the first communication apparatus or the second communication apparatus), the first communication apparatus may determine, based on the received sensing measurement result, whether the state indicator of the terminal device meets the first trigger condition. Further, the first communication apparatus may notify the network device to perform sensing measurement.

According to the communication sensing methods in FIG. 6 and FIG. 7, this application provides several possible implementations based on different system architectures.

In a first possible implementation, the system architecture may be shown in FIG. 2, the first communication apparatus may be an EMS, and the second communication apparatus may be an NMS. Specific steps are shown in FIG. 8.

S801: The NMS sends second request information to the EMS; and correspondingly, the EMS receives the second request information from the NMS.

The second request information indicates device information of the terminal device, precision information of the terminal device, reporting configuration information, and first indication information.

S802: The EMS determines a network device based on the device information and the precision information.

S803: The EMS sends first request information to the network device; and correspondingly, the network device receives the first request information from the EMS.

The first request information indicates the device information of the terminal device, first configuration information, a first task, and first indication information.

The first configuration information is determined based on the precision information, and the first task is determined based on the reporting configuration information.

S804: The network device configures a sensing measurement parameter based on the first configuration information.

It should be noted that when the first task indicates the first trigger condition, the network device may send the first trigger condition to the terminal device. Specific steps are as follows:
S805a: The network device sends the first trigger condition to the terminal device; and correspondingly, the terminal device receives the first trigger condition from the network device.

The network device may send the first trigger condition to the terminal device based on the device information.

S805b: When determining that the first trigger condition is met, the terminal device sends fifth indication information to the network device; and correspondingly, the network device receives the fifth indication information from the terminal device.

After receiving the fifth indication information, the network device continues to perform the following steps.

S805: The network device sends a sensing signal to the terminal device.

The network device may determine a sensing measurement task based on the first task, and send the sensing signal to the terminal device based on the first task.

S806: The network device receives an echo signal from the terminal device.

The echo signal is formed when the network device sends a sensing signal to the terminal device and the sensing signal is reflected at the terminal device.

S807: The network device adjusts the sensing measurement result based on the first indication information.

The network device may determine the sensing measurement result based on the echo signal, and adjust the sensing measurement result based on the first indication information.

S808: The network device sends an adjusted sensing measurement result to the EMS; and correspondingly, the EMS receives the sensing measurement result from the network device.

S809: The EMS sends the adjusted sensing measurement result to the NMS; and correspondingly, the NMS receives the adjusted sensing measurement result from the EMS.

It may be understood that when the terminal device moves, the NMS may send the device information of the terminal device to the EMS in real time. Further, the EMS may select a network device in real time to perform sensing measurement on the terminal device, thereby improving sensing measurement precision of the network device for the terminal device.

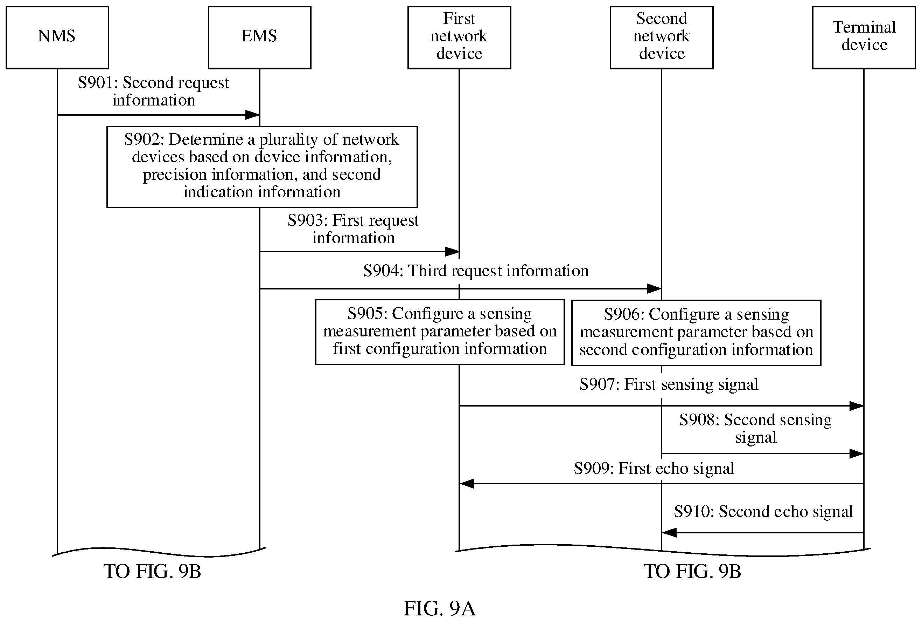

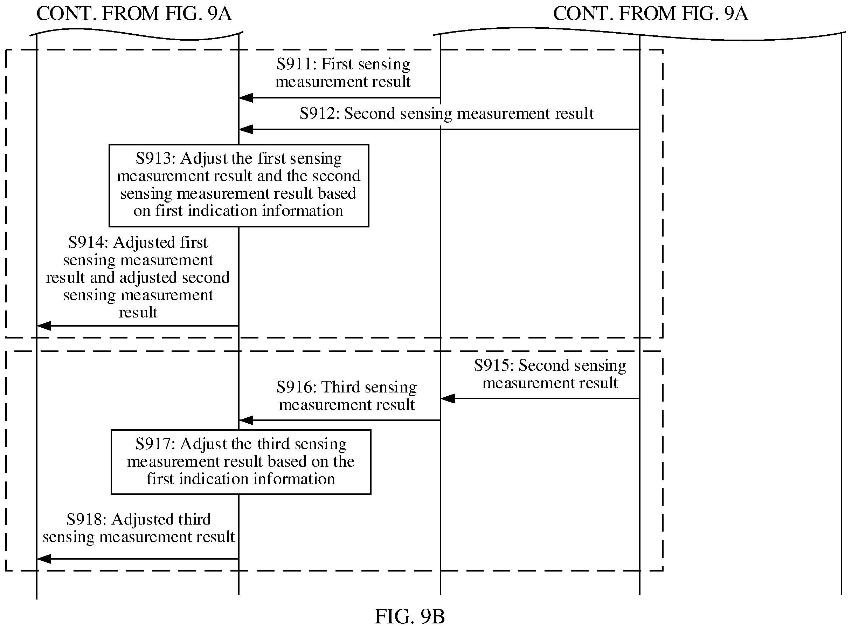

In a second possible implementation, compared with the first possible embodiment, the EMS may determine a plurality of network devices. For example, the plurality of network devices are two network devices (that is, a first network device and a second network device). Specific steps are shown in FIG. 9A and FIG. 9B.

S901: The NMS sends second request information to the EMS; and correspondingly, the EMS receives the second request information from the NMS.

The second request information indicates device information of the terminal device, precision information of the terminal device, reporting configuration information, second indication information, and first indication information.

S902: The EMS determines a plurality of network devices based on the device information, the precision information, and the second request information.

S903: The EMS sends first request information to the first network device; and correspondingly, the first network device receives the first request information from the EMS.

The first request information indicates first configuration information and a first task.

The first configuration information is determined based on the reporting configuration information, and the first task is determined based on the reporting configuration information.

S904: The EMS sends third request information to the second network device; and correspondingly, the second network device receives the third request information from the EMS.

The third request information indicates second configuration information and a second task.

The second configuration information is determined based on the reporting configuration information, and the second task is determined based on the reporting configuration information.

S905: The first network device configures a sensing measurement parameter based on the first configuration information.

S906: The second network device configures a sensing measurement parameter based on the second configuration information.

S907: The first network device sends a first sensing signal to the terminal device.

S908: The second network device sends a second sensing signal to the terminal device.

S909: The first network device receives a first echo signal from the terminal device.

The first echo signal is formed when the first network device sends the first sensing signal to the terminal device and the first sensing signal is reflected at the terminal device.

S910: The second network device receives a second echo signal from the terminal device.

The second echo signal is formed when the second network device sends the second sensing signal to the terminal device and the second sensing signal is reflected at the terminal device.

It should be noted that when the first task indicates a first trigger condition, or the second task indicates a second trigger condition, the first network device may send the first trigger condition according to the method described in S805a and S805b. Similarly, the second network device may send the second trigger condition according to the method described in S805a and S805b. Details are not described herein again.

S911: The first network device sends a first sensing measurement result to the EMS; correspondingly, the EMS receives the first sensing measurement result from the first network device.

S912: The second network device sends a second sensing measurement result to the EMS; and correspondingly, the EMS receives the second sensing measurement result from the second network device.

S913: The EMS adjusts the first sensing measurement result and the second sensing measurement result based on the first indication information.

S914: The EMS sends an adjusted first sensing measurement result and an adjusted second sensing measurement result to the NMS; and correspondingly, the NMS receives the adjusted first sensing measurement result and the adjusted second sensing measurement result from the EMS.

Optionally, the first request information or the third request information may further indicate fourth indication information. For example, the fourth indication information indicates that the first network device is an aggregation node. The second network device may send the second sensing measurement result to the first network device. Specific steps are as follows:

S915: The second network device sends the second sensing measurement result to the first network device; and the first network device receives the second sensing measurement result from the second network device.

The first network device may compress the first sensing measurement result and the second sensing measurement result (for example, remove a repeated sensing measurement result) to form a third sensing measurement result.

S916: The first network device sends the third sensing measurement result to the EMS; and correspondingly, the EMS receives the third sensing measurement result from the first network device.

S917: The EMS adjusts the third sensing measurement result based on the first indication information.

S918: The EMS sends an adjusted third sensing measurement result to the NMS; and correspondingly, the NMS receives the adjusted third sensing measurement result from the EMS.

Based on the second possible implementation, the EMS may determine that the plurality of network devices perform sensing measurement on the terminal device, and may obtain sensing measurement results of a plurality of areas of the terminal device, to perform three-dimensional (three-dimensional, 3D) modeling on the terminal device to obtain a 3D model of the terminal device. In addition, the EMS determines the first network device as an aggregation node, and the aggregation node may remove a repeated part of the sensing measurement result, thereby reducing load of the EMS and improving working efficiency of the EMS.

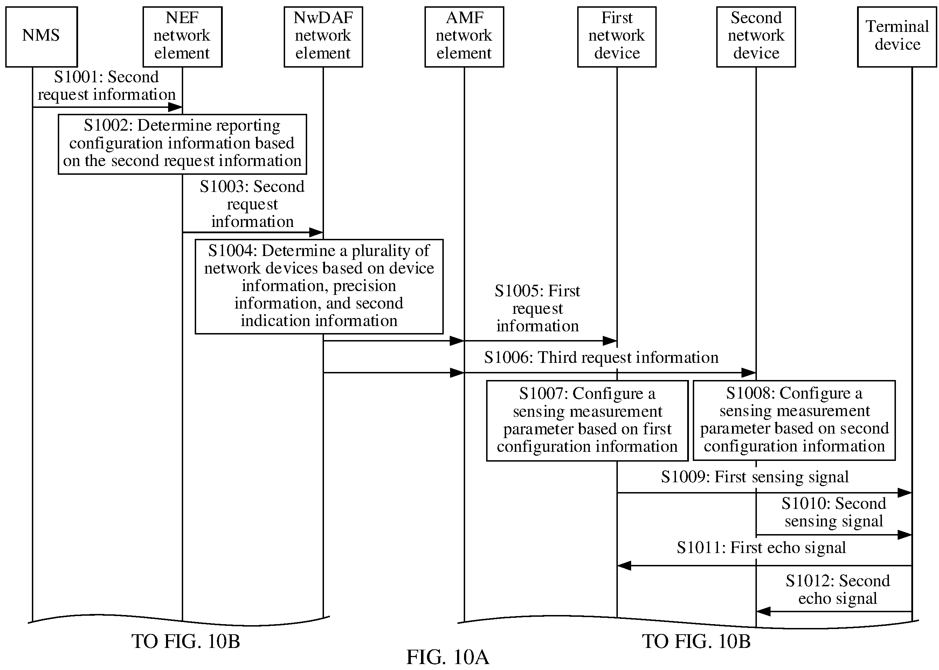

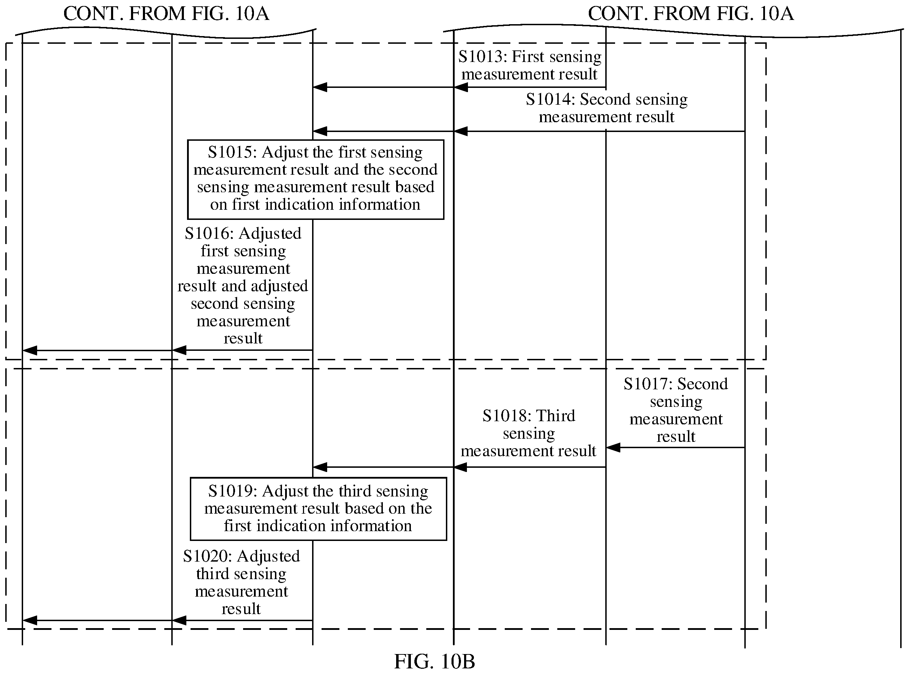

In a third possible implementation, the system architecture may be shown in FIG. 3. Different from the second possible implementation, this application may be applied to a core network. The first communication apparatus may be a core network element. Specific steps are shown in FIG. 10A and FIG. 10B.

S1001: The NMS sends second request information to the NEF network element; and correspondingly, the NEF network element receives the second request information from the NMS.

The second request information indicates device information of the terminal device, precision information of the terminal device, reporting configuration information, second indication information, and first indication information.

S1002: The NEF network element determines reporting configuration information based on the second request information.

The NEF network element may determine a reporting task based on the reporting configuration information, and the NEF network element may report a sensing measurement result to the NMS based on the reporting task.

It may be understood that, the NMS learns that the sensing measurement result needs to be sent via the NEF network element.

S1003: The NEF network element sends second request information to an NwDAF network element; and correspondingly, the NwDAF network element receives the second request information from the NEF network element.

S1004: The NwDAF network element determines the plurality of network devices based on the device information, the precision information, and the second indication information.

S1005: The NwDAF network element sends first request information to the first network device; and correspondingly, the first network device receives the first request information from the NwDAF network element.

The first request information indicates first configuration information and a first task. The first configuration information may be determined based on the precision information, and the first task may be determined based on the reporting configuration information.

The first request information sent by the NwDAF network element to the first network device needs to be forwarded via an AMF network element.

S1006: The NwDAF network element sends third request information to the second network device; and correspondingly, the second network device receives the third request information from the NwDAF network element.

The third request information indicates second configuration information and a second task. The second configuration information may be determined based on the precision information, and the second task may be determined based on the reporting configuration information.

The third request information sent by the NwDAF network element to the second network device needs to be forwarded via an AMF network element.

S1007: The first network device configures a sensing measurement parameter based on the first configuration information.

S1008: The second network device configures a sensing measurement parameter based on the second configuration information.

S1009: The first network device sends a first sensing signal to the terminal device.

S1010: The second network device sends a second sensing signal to the terminal device.

S1011: The first network device receives a first echo signal from the terminal device.

The first echo signal is formed when the first network device sends the first sensing signal to the terminal device and the first sensing signal is reflected at the terminal device.

S1012: The second network device receives a second echo signal from the terminal device.

The second echo signal is formed when the second network device sends the second sensing signal to the terminal device and the second sensing signal is reflected at the terminal device.

It should be noted that when the first task indicates a first trigger condition, or the second task indicates a second trigger condition, the first network device may send the first trigger condition according to the method described in S805a and S805b. Similarly, the second network device may send the second trigger condition according to the method described in S805a and S805b. Details are not described herein again.

S1013: The first network device sends a first sensing measurement result to the NwDAF network element; and correspondingly, the NwDAF network element receives the first sensing measurement result from the first network device.

S1014: The second network device sends a second sensing measurement result to the NwDAF network element; and correspondingly, the NwDAF network element receives the second sensing measurement result from the second network device.

S1015: The NwDAF network element adjusts the first sensing measurement result and the second sensing measurement result based on the first indication information.

S1016: The NwDAF network element sends an adjusted first sensing measurement result and an adjusted second sensing measurement result to the NMS; and correspondingly, the NMS receives the adjusted first sensing measurement result and the adjusted second sensing measurement result from the EMS.

It should be noted that the NwDAF network element needs to first send the first sensing measurement result and the second sensing measurement result to the NEF network element, and then the NEF network element reports the first sensing measurement result and the second sensing measurement result to the NMS based on the reporting configuration information.

Optionally, the first request information or the third request information may further indicate fourth indication information, where the fourth indication information may indicate that the first network device is an aggregation node, and the second network device may send the second sensing measurement result to the first network device. Specific steps are as follows:
S1017: The second network device sends the second sensing measurement result to the first network device; and the first network device receives the second sensing measurement result from the second network device.

The first network device may compress the first sensing measurement result and the second sensing measurement result (for example, remove a repeated sensing measurement result) to form a third sensing measurement result.

S1018: The first network device sends the third sensing measurement result to the NwDAF network element; and correspondingly, the NwDAF network element receives the third sensing measurement result from the first network device.

S1019: The NwDAF network element adjusts the third sensing measurement result based on the first indication information.

S1020: The NwDAF network element sends an adjusted third sensing measurement result to the NMS; and correspondingly, the NMS receives the adjusted third sensing measurement result from the NwDAF network element.

It should be noted that the NwDAF network element first sends the first sensing measurement result and the second sensing measurement result to the NEF network element, and the NEF network element reports the first sensing measurement result and the second sensing measurement result to the NMS based on the reporting configuration information.

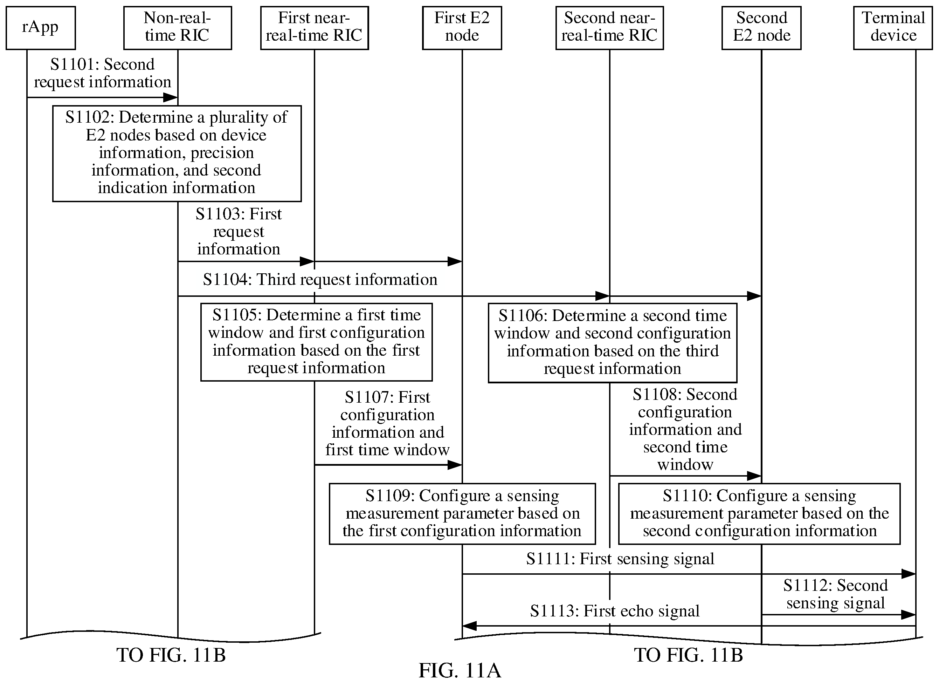

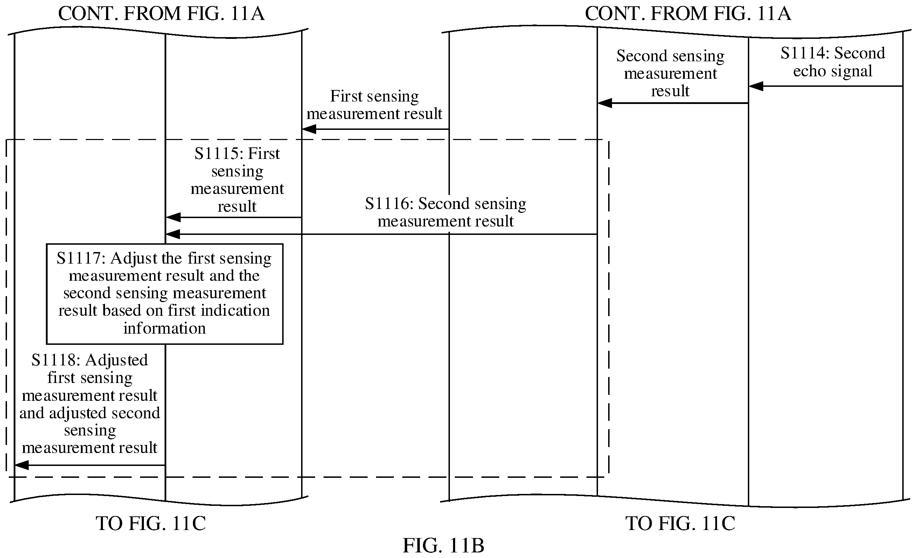

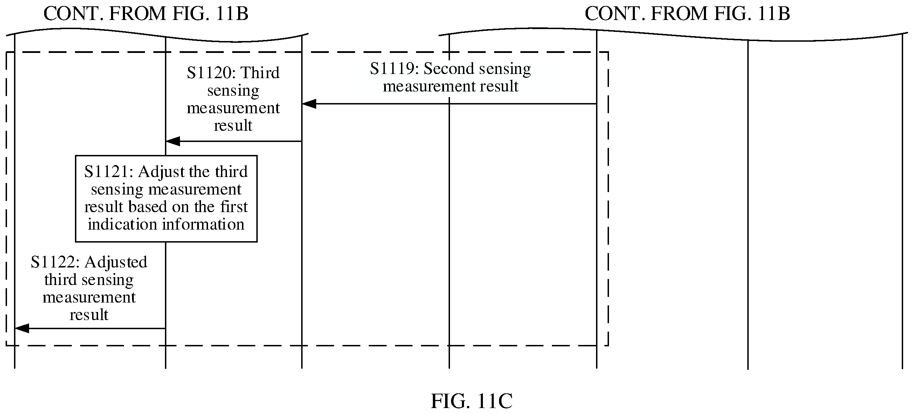

In a fourth possible implementation, the system architecture may be shown in FIG. 4. The first communication apparatus may be a non-real-time RIC, the second communication apparatus may be a non-real-time RIC application (non-real-time RIC application, rApp), and the network device is equivalent to a near-real-time RIC and an E2 node. Specific steps are shown in FIG. 11A to FIG. 11C.

S1101: The rApp sends second request information to the non-real-time RIC; and correspondingly, the non-real-time RIC receives the second request information from the rApp.

The rApp is a software application that can run on the non-real-time RIC. The rApp may be configured to automatically deploy and run a RAN management and optimization instance.

The second request information indicates device information of the terminal device, precision information of the terminal device, reporting configuration information, second indication information, and first indication information.

S1102: The non-real-time RIC determines a plurality of E2 nodes based on the device information, the precision information, and the second indication information.

S1103: The non-real-time RIC sends first request information to a first near-real-time RIC; and correspondingly, the first near-real-time RIC receives the first request information from the EMS.

The first request information indicates device information, precision information, time window information, and reporting configuration information.

The time window information indicates a time window in which a first E2 node and a second E2 node perform sensing measurement.

S1104: The non-real-time RIC sends third request information to a second near-real-time RIC; and correspondingly, the second near-real-time RIC receives the third request information from the EMS.

The third request information indicates device information, precision information, time window information, and reporting configuration information.

S1105: The first near-real-time RIC determines a first time window and first configuration information based on the first request information.

The first configuration information may be determined based on the device information and the precision information, and the first time window may be determined based on the time window information.

S1106: The second near-real-time RIC determines a second time window and second configuration information based on the third request information.

The second configuration information may be determined based on the device information and the precision information, and the second time window may be determined based on the time window information.

S1107: The first near-real-time RIC sends the first configuration information and the first time window to the first E2 node.

The first E2 node may perform sensing measurement in a time period indicated by the first time window.

S1108: The second near-real-time RIC sends the second configuration information and the second time window to the second E2 node.

The second E2 node may perform sensing measurement in a time period indicated by the second time window.

S1109: The first E2 node configures a sensing measurement parameter based on the first configuration information.

S1110: The second E2 node configures a sensing measurement parameter based on the second configuration information.

S1111: The first E2 node sends a first sensing signal to the terminal device.

S1112: The second E2 node sends a second sensing signal to the terminal device.

S1113: The first E2 node receives a first echo signal from the terminal device.

The first echo signal is formed when the first network device sends the first sensing signal to the terminal device and the first sensing signal is reflected at the terminal device.

The first E2 node may determine a first sensing measurement result based on the first echo signal, and send the first sensing measurement result to the first near-real-time RIC.

S1114: The second E2 node receives a second echo signal from the terminal device.

The second echo signal is formed when the second network device sends the second sensing signal to the terminal device and the second sensing signal is reflected at the terminal device.

The second E2 node may determine a second sensing measurement result based on the second echo signal, and send the second sensing measurement result to the second near-real-time RIC.

S1115: The first near-real-time RIC sends the first sensing measurement result to the non-real-time RIC; and correspondingly, the non-real-time RIC receives the first sensing measurement result from the first near-real-time RIC.

S1116: The second near-real-time RIC sends the second sensing measurement result to the non-real-time RIC; and correspondingly, the non-real-time RIC receives the second sensing measurement result from the second near-real-time RIC.

S1117: The non-real-time RIC adjusts the first sensing measurement result and the second sensing measurement result based on the first indication information.

S1118: The non-real-time RIC sends an adjusted first sensing measurement result and an adjusted second sensing measurement result to the rApp; and correspondingly, the rApp receives the adjusted first sensing measurement result and the adjusted second sensing measurement result from the non-real-time RIC.

Optionally, the first request information or the third request information may further indicate fourth indication information, where the fourth indication information may indicate that the first near-real-time RIC is an aggregation node, and the second near-real-time RIC may send the second sensing measurement result to the first near-real-time RIC. Specific steps are as follows:

S1119: The second near-real-time RIC sends the second sensing measurement result to the first near-real-time RIC; and correspondingly, the first near-real-time RIC receives the second sensing measurement result from the second near-real-time RIC.

The first near-real-time RIC may compress the first sensing measurement result and the second sensing measurement result (for example, remove a repeated sensing measurement result) to form a third sensing measurement result.

S1120: The first near-real-time RIC sends the third sensing measurement result to the non-real-time RIC; and correspondingly, the non-real-time RIC receives the third sensing measurement result from the first near-real-time RIC.

S1121: The non-real-time RIC adjusts the third sensing measurement result based on the first indication information.

S1122: The non-real-time RIC sends an adjusted third sensing measurement result to the rApp; and correspondingly, the rApp receives the adjusted third sensing measurement result from the non-real-time RIC.

It should be noted that the E2 node may be an O-DU (used for data processing, and may convert information into a radio frequency signal) and an O-RU (which may send a device signal or may receive a radio frequency signal). The O-DU and the O-RU may be independent devices, or may be different units in a device. For ease of understanding, the O-DU and the O-RU may be collectively referred to as an E2 node, and the O-DU and the O-RU may communicate with each other.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that, in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

The foregoing mainly describes the solutions provided in this application from the perspective of interaction between devices. Correspondingly, this application further provides a communication apparatus. The communication apparatus is configured to implement the foregoing methods. The communication apparatus may be the terminal device in the foregoing method embodiment, an apparatus including the foregoing terminal device, or a component that can be used in the terminal device. Alternatively, the communication apparatus may be the network device in the foregoing method embodiment, an apparatus including the foregoing network device, or a component that can be used in the network device.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

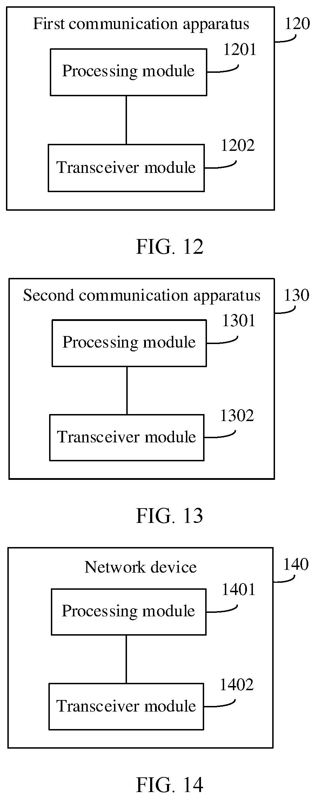

In a first implementation scenario, for example, the communication apparatus is the first communication apparatus in the foregoing method embodiment. FIG. 12 is a diagram of a structure of a first communication apparatus 120. The first communication apparatus 120 includes a processing module 1201 and a transceiver module 1202.

In some embodiments, the first communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving and sending steps performed by the first communication apparatus in the foregoing method embodiments, and/or configured to support another process of the technology described in this specification. The processing module 1201 may be configured to perform a processing (for example, determining or generating) step performed by the terminal in the foregoing method embodiments, and/or configured to support another process of the technology described in this specification.

For example, the processing module 1201 is configured to obtain device information and precision information of one or more terminal devices, where the precision information indicates a difference between a sensing measurement result of the terminal device and an actual shape of the terminal device; the processing module 1201 is further configured to determine one or more network devices based on the device information and the precision information; the transceiver module 1202 is configured to send first request information to the one or more network devices, where the first request information is used to perform sensing measurement; and the transceiver module 1202 is further configured to receive a sensing measurement result from the one or more network devices.

In a possible implementation, the processing module 1201 is further configured to determine, based on one or more of the following, that sensing measurement precision of the one or more network devices meets a requirement corresponding to the precision information: a sensing measurement capability of the network device, load of the network device, or a location of the network device.

In a possible implementation, the first request information indicates one or more of the following: the precision information, the device information, first configuration information, a first task, or first indication information, where the first configuration information indicates a configuration parameter for the network device to perform sensing measurement, the first configuration information is determined based on the precision information, the first task indicates the network device to perform sensing measurement, and the first indication information indicates a feedback type of the sensing measurement result.

In a possible implementation, the feedback type of the sensing measurement result is a sensing measurement result; or the feedback type of the sensing measurement result is a model corresponding to the sensing measurement result.

In a possible implementation, the first task indicates one or more of the following: first time, a first periodicity, a first mode, and a first trigger condition, where the first time indicates time for which the network device performs sensing measurement, the first periodicity indicates a periodicity for performing sensing measurement, the first mode indicates to perform sensing measurement based on the first periodicity or the first trigger condition, the first trigger condition indicates one or more of the following: a trigger factor, a trigger rule, or third indication information, the trigger factor indicates a status indicator of the terminal device, the trigger rule indicates to trigger sensing measurement when one or more status indicators of the terminal device meet a threshold, and the third indication information indicates whether the trigger rule is met a plurality of times.

In a possible implementation, the first request information further indicates a time window associated with each of a plurality of network devices associated with the terminal device, and the time window associated with each network device indicates time for which each network device performs sensing measurement.

In a possible implementation, the transceiver module 1202 is further configured to receive second request information from a second communication apparatus, where the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device; and the processing module 1201 is further configured to obtain the device information and the precision information of the one or more terminal devices based on the first request information.

In a possible implementation, the second request information further indicates one or more of the following: reporting configuration information, second indication information, or first indication information, where the reporting configuration information indicates one or more of the following: reporting time, a reporting mode, a reporting periodicity, or a reporting trigger condition; the reporting mode indicates to report the sensing measurement result based on the reporting periodicity or the reporting trigger condition; the second indication information indicates first area information; and the first indication information indicates a feedback type of the sensing measurement result.

In a possible implementation, the processing module 1201 is further configured to determine the plurality of network devices based on the device information, the precision information, and the first indication information.

In a possible implementation, the processing module 1201 is further configured to determine a first task based on the reporting configuration information, where the first task indicates the network device to perform sensing measurement.

In a possible implementation, the processing module 1201 is further configured to determine, from the plurality of network devices, one network device as an aggregation node, where the aggregation node is configured to receive a sensing measurement result from another network device; and the transceiver module 1202 is further configured to send fourth indication information to the plurality of network devices, where the fourth indication information indicates to report a sensing measurement result to the aggregation node, and the fourth indication information includes identification information of the aggregation node.

In a possible implementation, the transceiver module 1202 is further configured to receive a sensing measurement result from the aggregation node; and the transceiver module 1202 is further configured to send the sensing measurement result to the second communication apparatus; or the transceiver module 1202 is further configured to receive a sensing measurement result from the aggregation node; and the transceiver module 1202 is further configured to: adjust the sensing measurement result based on first indication information, and send an adjusted sensing measurement result to the second communication apparatus, where the first indication information indicates a feedback type of the sensing measurement result.

In a possible implementation, the processing module 1201 is further configured to adjust sensing measurement results of the plurality of network devices based on first indication information, to obtain adjusted sensing measurement results, where the first indication information indicates a feedback type of the sensing measurement result; and the transceiver module 1202 is further configured to send the adjusted sensing measurement results to the second communication apparatus.

In a possible implementation, the first communication apparatus is an element management device; or the first communication apparatus is a core network element.

In a possible implementation, the second communication apparatus is a network management device; the second communication apparatus is an end-to-end network twin service provider entity and a RAN network twin service provider entity; or the second communication apparatus is a production management device.

In this application, the first communication apparatus 120 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the first communication apparatus 120 may be in a form of the communication apparatus 50 shown in FIG. 5.

In an example, a function/implementation process of the processing module 1201 in FIG. 12 may be implemented by the processor 501 in the communication apparatus 50 shown in FIG. 5 by invoking computer-executable instructions stored in the memory 503. A function/implementation process of the transceiver module 1202 in FIG. 12 may be implemented by the communication interface 504 in the communication apparatus 50 shown in FIG. 5.

In some embodiments, when the first communication apparatus 120 in FIG. 12 is a chip or a chip system, a function/implementation process of the transceiver module 1202 may be implemented through an input/output interface (or a communication interface) of the chip or the chip system, and a function/implementation process of the processing module 1201 may be implemented through a processor (or a processing circuit) of the chip or the chip system.

The first communication apparatus 120 provided in this embodiment may perform the foregoing methods. Therefore, for technical effects that can be achieved by the first communication apparatus, refer to the foregoing method embodiments. Details are not described herein again.

In a second implementation scenario, for example, the communication apparatus is the second communication apparatus in the foregoing method embodiment. FIG. 13 is a diagram of a structure of a second communication apparatus 130. The second communication apparatus 130 includes a processing module 1301 and a transceiver module 1302.

In some embodiments, the second communication apparatus 130 may further include a storage module (not shown in FIG. 13), configured to store program instructions and data.

In some embodiments, the transceiver module 1302 may also be referred to as a transceiver unit, and is configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module, respectively configured to perform receiving and sending steps performed by the second communication apparatus in the foregoing method embodiments, and/or configured to support another process of the technology described in this specification. The processing module 1301 may be configured to perform a processing (for example, determining or generating) step performed by the terminal in the foregoing method embodiments, and/or configured to support another process of the technology described in this specification.

For example, the transceiver module 1302 is configured to send second request information to a first communication apparatus, where the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device; and the transceiver module 1302 is further configured to receive a sensing measurement result from the first communication apparatus, where the sensing measurement result is determined based on one or more network devices, and the one or more network devices are determined based on the device information and the precision information.

In a possible implementation, the second request information indicates one or more of the following: reporting configuration information, second indication information, or first indication information, where the reporting configuration information indicates one or more of the following: reporting time, a reporting mode, a reporting periodicity, or a reporting trigger condition; the reporting mode indicates to report the sensing measurement result based on the reporting periodicity or the reporting trigger condition; the second indication information indicates first area information; and the first indication information indicates a feedback type of the sensing measurement result.

In a possible implementation, the first communication apparatus is an element management device; or the first communication apparatus is a core network element.

In a possible implementation, the second communication apparatus is a network management device; the second communication apparatus is an end-to-end network twin service provider entity and a RAN network twin service provider entity; or the second communication apparatus is a production management device.

In this application, the second communication apparatus 130 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the second communication apparatus 130 may be in a form of the communication apparatus 50 shown in FIG. 5.

In an example, a function/implementation process of the processing module 1301 in FIG. 13 may be implemented by the processor 501 in the communication apparatus 50 shown in FIG. 5 by invoking computer-executable instructions stored in the memory 503. A function/implementation process of the transceiver module 1302 in FIG. 13 may be implemented by the communication interface 504 in the communication apparatus 50 shown in FIG. 5.

In some embodiments, when the second communication apparatus 130 in FIG. 13 is a chip or a chip system, a function/implementation process of the transceiver module 1302 may be implemented through an input/output interface (or a communication interface) of the chip or the chip system, and a function/implementation process of the processing module 1301 may be implemented through a processor (or a processing circuit) of the chip or the chip system.

The second communication apparatus 130 provided in this embodiment may perform the foregoing methods. Therefore, for technical effects that can be achieved by the second communication apparatus, refer to the foregoing method embodiments. Details are not described herein again.

In a third implementation scenario, for example, the communication apparatus is the network device in the foregoing method embodiment. FIG. 14 is a diagram of a structure of a network device 140. The network device 140 includes a processing module 1401 and a transceiver module 1402.

In some embodiments, the network device 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the network device in the foregoing method embodiments, and/or configured to support another process of the technology described in this specification. The processing module 1401 may be configured to perform a processing (for example, determining or generating) step performed by the network device in the foregoing method embodiments, and/or configured to support another process of the technology described in this specification.

For example, the transceiver module 1402 is configured to receive first request information from a first communication apparatus, where the first request information is used to perform sensing measurement, the first request information indicates a first task, the first task indicates a first trigger condition, the first trigger condition indicates a trigger factor and a trigger rule, the trigger factor indicates a status indicator of a terminal device, and the trigger rule indicates to trigger sensing measurement when one or more status indicators of the terminal device meet a threshold; the transceiver module 1402 is further configured to send the first trigger condition to the terminal device; the processing module 1401 is configured to obtain a sensing measurement result based on the first trigger condition; and the transceiver module 1402 is further configured to send the sensing measurement result to the first communication apparatus.

In a possible implementation, the first request information further indicates one or more of the following: precision information, device information of the terminal device, first configuration information, or first indication information. The precision information indicates a difference between a sensing measurement result of the terminal device and an actual shape of the terminal device; the first configuration information indicates a configuration parameter for the network device to perform sensing measurement, and the first configuration information is determined based on the precision information; and the first indication information indicates a feedback type of the sensing measurement result.

In a possible implementation, the first task further indicates one or more of the following: first time, a first periodicity, or a first mode, where the first time indicates time for which the network device performs sensing measurement, the first periodicity indicates a periodicity for performing sensing measurement, and the first mode indicates to perform sensing measurement based on the first periodicity or the first trigger condition.

In a possible implementation, the first trigger condition further indicates third indication information, and the third indication information indicates whether the trigger rule is met a plurality of times.

In a possible implementation, the transceiver module 1402 is further configured to receive fifth indication information from the terminal device after sending the first trigger condition to the terminal device, where the fifth indication information indicates that a status indicator of the terminal device meets the first trigger condition; and the processing module 1401 is further configured to perform sensing measurement on the terminal device based on the fifth indication information, to obtain the sensing measurement result.

In a possible implementation, the transceiver module 1402 is further configured to receive fourth indication information from the first communication apparatus, where the fourth indication information indicates to report a sensing measurement result to an aggregation node, and the fourth indication information includes identification information of the aggregation node; and the transceiver module 1402 is further configured to send the sensing measurement result to the aggregation node based on the fourth indication information; or the transceiver module 1402 is further configured to receive a sensing measurement result from another network device based on the fourth indication information.

In a possible implementation, the processing module 1401 is further configured to adjust the sensing measurement result based on first indication information, to obtain an adjusted sensing measurement result, where the first indication information indicates a feedback type of the sensing measurement result; and the transceiver module 1402 is further configured to send the adjusted sensing measurement result to the first communication apparatus.

In this application, the network device 140 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the network device 140 may be in a form of the communication apparatus 50 shown in FIG. 5.

In an example, a function/implementation process of the processing module 1401 in FIG. 14 may be implemented by the processor 501 in the communication apparatus 50 shown in FIG. 5 by invoking computer-executable instructions stored in the memory 503. A function/implementation process of the transceiver module 1402 in FIG. 14 may be implemented by the communication interface 504 in the communication apparatus 50 shown in FIG. 5.

In some embodiments, when the network device 140 in FIG. 14 is a chip or a chip system, a function/implementation process of the transceiver module 1402 may be implemented through an input/output interface (or a communication interface) of the chip or the chip system, and a function/implementation process of the processing module 1401 may be implemented through a processor (or a processing circuit) of the chip or the chip system.

The network device 140 provided in this embodiment may perform the foregoing methods. Therefore, for technical effects that can be achieved by the network device, refer to the foregoing method embodiments. Details are not described herein again.

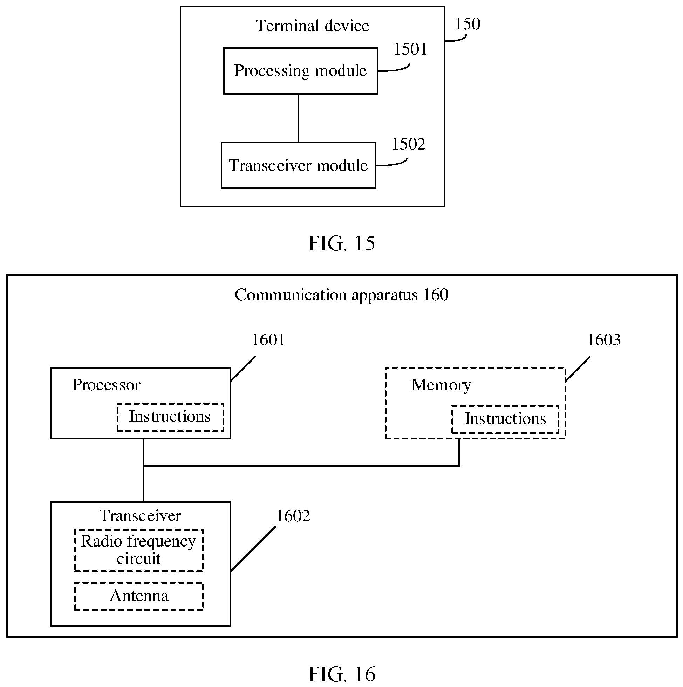

In a fourth implementation scenario, for example, the communication apparatus is the terminal device in the foregoing method embodiment. FIG. 15 is a diagram of a structure of a terminal device 150. The terminal device 150 includes a processing module 1501 and a transceiver module 1502.

In some embodiments, the terminal device 150 may further include a storage module (not shown in FIG. 15), configured to store program instructions and data.

In some embodiments, the transceiver module 1502 may also be referred to as a transceiver unit, and is configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving and sending steps performed by the terminal device in the foregoing method embodiments, and/or configured to support another process of the technology described in this specification. The processing module 1501 may be configured to perform a processing (for example, determining or generating) step performed by the terminal device in the foregoing method embodiments, and/or configured to support another process of the technology described in this specification.

For example, the transceiver module 1502 is configured to receive a first trigger condition from a network device, where the first trigger condition indicates a trigger factor and a trigger rule, the trigger factor indicates a status indicator of the terminal device, the trigger rule indicates to trigger sensing measurement when one or more status indicators of the terminal device meet a threshold; and the transceiver module 1502 is further configured to send fifth indication information to the network device based on the trigger rule when the status indicator meets the trigger rule, where the fifth indication information indicates that the status indicator of the terminal device meets the first trigger condition.

In a possible implementation, the first trigger condition further indicates third indication information, and the third indication information indicates whether the trigger rule is met a plurality of times.

In this application, the terminal device 150 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the terminal device 150 may be in a form of the communication apparatus 50 shown in FIG. 5.

In an example, a function/implementation process of the processing module 1501 in FIG. 15 may be implemented by the processor 501 in the communication apparatus 50 shown in FIG. 5 by invoking computer-executable instructions stored in the memory 503. A function/implementation process of the transceiver module 1502 in FIG. 15 may be implemented by the communication interface 504 in the communication apparatus 50 shown in FIG. 5.

In some embodiments, when the terminal device 150 in FIG. 15 is a chip or a chip system, a function/implementation process of the transceiver module 1502 may be implemented through an input/output interface (or a communication interface) of the chip or the chip system, and a function/implementation process of the processing module 1501 may be implemented through a processor (or a processing circuit) of the chip or the chip system.

The terminal device 150 provided in this embodiment may perform the foregoing methods. Therefore, for technical effects that can be achieved by the terminal device, refer to the foregoing method embodiments. Details are not described herein again.

In a possible product form, the first communication apparatus, the second communication apparatus, the network device, and the terminal device in embodiments of this application may be further implemented via one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the first communication apparatus, the second communication apparatus, the network device, and the terminal device in embodiments of this application may be implemented by using a general bus architecture. For ease of description, FIG. 16 is a diagram of a structure of a communication apparatus 160 according to an embodiment of this application. The communication apparatus 160 includes a processor 1601 and a transceiver 1602. The communication apparatus 160 may be a first communication apparatus or a chip or module in the first communication apparatus; or the communication apparatus 160 may be a second communication apparatus or a chip or module in the second communication apparatus; or the communication apparatus 160 may be a network device or a chip or module in the network device; or the communication apparatus 160 may be a terminal device or a chip or module in the terminal device. FIG. 16 shows only main components of the communication apparatus 160. In addition to the processor 1601 and the transceiver 1602, the communication apparatus may further include a memory 1603.

Optionally, the processor 1601 is mainly configured to: process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to: perform conversion between a baseband signal and a radio frequency signal, and process the radio frequency signal. The antenna is mainly configured to: receive and send a radio frequency signal in a form of an electromagnetic wave.

Optionally, the processor 1601, the transceiver 1602, and the memory 1603 may be connected through a communication bus.

After the communication apparatus is powered on, the processor 1601 may read the software program in the memory 1603, interpret and execute instructions of the software program, and process data of the software program. When data needs to be sent in a wireless manner, the processor 1601 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1601. The processor 1601 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments. The communication apparatus may be the first communication apparatus, the second communication apparatus, the network device, and the terminal device in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It can be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and may be located in one position, or may be distributed on a plurality of network units. Parts displayed as units may be or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a great effect.

Although this application is described with reference to specific features and all embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication sensing method, wherein the method is applied to a first communication apparatus, and the method comprises:
obtaining device information and precision information of one or more terminal devices, wherein the precision information indicates a difference between a sensing measurement result of the terminal device and an actual shape of the terminal device;
determining one or more network devices based on the device information and the precision information;
sending first request information to the one or more network devices, wherein the first request information is used to perform sensing measurement; and
receiving a sensing measurement result from the one or more network devices.

2. The method according to claim 1, wherein
determining, based on one or more of the following, that sensing measurement precision of the one or more network devices meets a requirement corresponding to the precision information: a sensing measurement capability of the network device, load of the network device, or a location of the network device.

3. The method according to claim 1 or 2, wherein
the first request information indicates one or more of the following: the precision information, the device information, first configuration information, a first task, or first indication information, wherein
the first configuration information indicates a configuration parameter for the network device to perform sensing measurement, and the first configuration information is determined based on the precision information;
the first task indicates the network device to perform sensing measurement; and
the first indication information indicates a feedback type of the sensing measurement result.

4. The method according to claim 3, wherein
the feedback type of the sensing measurement result is a sensing measurement result; or
the feedback type of the sensing measurement result is a model corresponding to the sensing measurement result.

5. The method according to claim 3 or 4, wherein
the first task indicates one or more of the following: first time, a first periodicity, a first mode, and a first trigger condition, wherein
the first time indicates time for which the network device performs sensing measurement;
the first periodicity indicates a periodicity for performing sensing measurement;
the first mode indicates to perform sensing measurement based on the first periodicity or the first trigger condition; and
the first trigger condition indicates one or more of the following: a trigger factor, a trigger rule, or third indication information; the trigger factor indicates a status indicator of the terminal device; the trigger rule indicates to trigger sensing measurement when one or more status indicators of the terminal device meet a threshold; and the third indication information indicates whether the trigger rule is met a plurality of times.

6. The method according to any one of claims 1 to 5, wherein
the first request information further indicates a time window associated with each of a plurality of network devices associated with the terminal device, wherein the time window associated with each network device indicates time for which each network device performs sensing measurement.

7. The method according to any one of claims 1 to 6, wherein obtaining the device information and the precision information of the one or more terminal devices comprises:
receiving second request information from a second communication apparatus, wherein the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device; and
obtaining the device information and the precision information of the one or more terminal devices based on the first request information.

8. The method according to claim 7, wherein
the second request information further indicates one or more of the following: reporting configuration information, second indication information, or first indication information, wherein
the reporting configuration information indicates one or more of the following: reporting time, a reporting mode, a reporting periodicity, or a reporting trigger condition; and the reporting mode indicates to report the sensing measurement result based on the reporting periodicity or the reporting trigger condition;
the second indication information indicates first area information; and
the first indication information indicates a feedback type of the sensing measurement result.

9. The method according to claim 8, comprising:
determining the plurality of network devices based on the device information, the precision information, and the first indication information.

10. The method according to claim 8 or 9, wherein the method further comprises:
determining a first task based on the reporting configuration information, wherein the first task indicates the network device to perform sensing measurement.

11. The method according to any one of claims 1 to 10, wherein the method further comprises:
determining, from the plurality of network devices, one network device as an aggregation node, wherein the aggregation node is configured to receive a sensing measurement result from another network device; and
sending the fourth indication information to the plurality of network devices, wherein the fourth indication information indicates to report a sensing measurement result to the aggregation node, and the fourth indication information comprises identification information of the aggregation node.

12. The method according to claim 11, wherein the method further comprises:
receiving a sensing measurement result from the aggregation node; and sending the sensing measurement result to the second communication apparatus; or
receiving a sensing measurement result from the aggregation node; and adjusting the sensing measurement result based on first indication information, and sending an adjusted sensing measurement result to the second communication apparatus, wherein the first indication information indicates a feedback type of the sensing measurement result.

13. The method according to any one of claims 1 to 10, wherein the method further comprises:
adjusting sensing measurement results of the plurality of network devices based on first indication information, to obtain adjusted sensing measurement results, wherein the first indication information indicates a feedback type of the sensing measurement result; and
sending the adjusted sensing measurement results to the second communication apparatus.

14. The method according to any one of claims 1 to 13, wherein
the first communication apparatus is an element management device; or
the first communication apparatus is a core network element.

15. The method according to any one of claims 1 to 14, wherein
the second communication apparatus is a network management device;
the second communication apparatus is an end-to-end network twin service provider entity and a radio access network network twin service provider entity; or
the second communication apparatus is a production management device.

16. A communication sensing method, wherein the method is applied to a second communication apparatus, and the method comprises:
sending second request information to a first communication apparatus, wherein the second request information is used to request to report a sensing measurement result of one or more terminal devices, the second request information indicates device information and precision information of the one or more terminal devices, and the precision information indicates a difference between a sensing measurement result of the terminal device and an actual shape of the terminal device; and
receiving a sensing measurement result from the first communication apparatus, wherein the sensing measurement result is determined based on the one or more network devices, and the one or more network devices are determined based on the device information and the precision information.

17. The method according to claim 16, wherein
the second request information further indicates one or more of the following: reporting configuration information, second indication information, or first indication information, wherein
the reporting configuration information indicates one or more of the following: reporting time, a reporting mode, a reporting periodicity, or a reporting trigger condition; and the reporting mode indicates to report the sensing measurement result based on the reporting periodicity or the reporting trigger condition;
the second indication information indicates first area information; and
the first indication information indicates a feedback type of the sensing measurement result.

18. A communication sensing method, comprising:
receiving first request information from a first communication apparatus, wherein the first request information is used to perform sensing measurement, the first request information indicates the first task, the first task indicates the first trigger condition, the first trigger condition indicates a trigger factor and a trigger rule, the trigger factor indicates a status indicator of a terminal device, and the trigger rule indicates to trigger sensing measurement when one or more status indicators of the terminal device meet a threshold;
sending the first trigger condition to the terminal device;
obtaining a sensing measurement result based on the first trigger condition; and
sending the sensing measurement result to the first communication apparatus.

19. The method according to claim 18, wherein
the first request information further indicates one or more of the following: precision information, device information of the terminal device, first configuration information, or first indication information, wherein
the precision information indicates a difference between a sensing measurement result of the terminal device and an actual shape of the terminal device;
the first configuration information indicates a configuration parameter for the network device to perform sensing measurement, and the first configuration information is determined based on the precision information; and
the first indication information indicates a feedback type of the sensing measurement result.

20. The method according to claim 18, wherein
the first task further indicates one or more of the following: first time, a first periodicity, or a first mode, wherein
the first time indicates time for which the network device performs sensing measurement;
the first periodicity indicates a periodicity for performing sensing measurement; and
the first mode indicates to perform sensing measurement based on the first periodicity or the first trigger condition.

21. The method according to claim 18, wherein
the first trigger condition further indicates third indication information, and the third indication information indicates whether the trigger rule is met a plurality of times.

22. The method according to any one of claims 18 to 21, wherein obtaining the sensing measurement result based on the first trigger condition comprises:
receiving fifth indication information from the terminal device after sending the first trigger condition to the terminal device, wherein the fifth indication information indicates that a status indicator of the terminal device meets the first trigger condition; and
performing sensing measurement on the terminal device based on the fifth indication information, to obtain the sensing measurement result.

23. The method according to any one of claims 18 to 22, wherein the method further comprises:
receiving fourth indication information from the first communication apparatus, wherein the fourth indication information indicates to report a sensing measurement result to an aggregation node, and the fourth indication information comprises identification information of the aggregation node; and
sending the sensing measurement result to the aggregation node based on the fourth indication information; or
receiving a sensing measurement result from another network device based on the fourth indication information.

24. The method according to any one of claims 18 to 23, wherein the method further comprises:
adjusting the sensing measurement result based on first indication information, to obtain an adjusted sensing measurement result, wherein the first indication information indicates a feedback type of the sensing measurement result; and
sending the adjusted sensing measurement result to the first communication apparatus.

25. A communication sensing method, comprising:
receiving a first trigger condition from a network device, wherein the first trigger condition indicates a trigger factor and a trigger rule, the trigger factor indicates a status indicator of a terminal device, and the trigger rule indicates to trigger sensing measurement when one or more status indicators of the terminal device meet a threshold; and
sending fifth indication information to the network device when the status indicator meets the trigger rule, wherein the fifth indication information indicates that the status indicator of the terminal device meets the first trigger condition.

26. The method according to claim 25, wherein
the first trigger condition further indicates third indication information, and the third indication information indicates whether the trigger rule is met a plurality of times.

27. A communication apparatus, comprising:
a processing module, configured to obtain device information and precision information of one or more terminal devices, wherein the precision information indicates a difference between a sensing measurement result of the terminal device and an actual shape of the terminal device, wherein
the processing module is further configured to determine one or more network devices based on the device information and the precision information; and
a transceiver module, configured to send first request information to the one or more network devices, wherein the first request information is used to perform sensing measurement, wherein
the transceiver module is further configured to receive a sensing measurement result from the one or more network devices.

28. A communication apparatus, wherein the communication apparatus comprises a processor; and the processor is configured to run a computer program or instructions, or configured to cause, by using a logic circuit, the communication apparatus to perform the communication sensing method according to any one of claims 1 to 15, or cause the communication apparatus to perform the communication sensing method according to either of claims 16 and 17, or cause the communication apparatus to perform the communication sensing method according to any one of claims 18 to 24, or cause the communication apparatus to perform the communication sensing method according to either of claims 25 and 26.

29. A computer-readable storage medium, wherein the computer-readable storage medium stores computer instructions or a program, and when the computer instructions or the program is run on a computer, the communication apparatus is caused to perform the communication sensing method according to any one of claims 1 to 15, or the communication apparatus is caused to perform the communication sensing method according to either of claims 16 and 17, or the communication apparatus is caused to perform the communication sensing method according to any one of claims 18 to 24, or the communication apparatus is caused to perform the communication sensing method according to either of claims 25 and 26.

30. A computer program product, wherein the computer program product comprises computer instructions, and when some or all of the computer instructions are run, the communication sensing method according to any one of claims 1 to 15 is caused to be performed, or the communication sensing method according to either of claims 16 and 17 is caused to be performed, or the communication sensing method according to any one of claims 18 to 24 is caused to be performed, or the communication sensing method according to either of claims 25 and 26 is caused to be performed.
